(19)

Europäisches
Patentamt
European
Patent Office
Office européen
des brevets

(11)  **EP 2 722 851 A2**

(12)  **EUROPEAN PATENT APPLICATION**

(43) Date of publication:
    23.04.2014 Bulletin 2014/17

(51) Int Cl.:
    *G21B 1/00* *(2006.01)*    *G21B 1/15* *(2006.01)*

(21) Application number: **14150136.1**

(22) Date of filing: **15.06.2009**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK TR**

(30) Priority: **13.06.2008  US 61593 P
            12.06.2009  US 484004**

(62) Document number(s) of the earlier application(s) in
    accordance with Art. 76 EPC:
    **09763778.9 / 2 304 737**

(71) Applicant: **Arcata Systems
    Santa Cruz, CA 95060 (US)**

(72) Inventors:
    • **Burke, Robert J.
      Santa Cruz, CA California 95060 (US)**
    • **Burke, Alexander Thomas
      Sunnyvale, CA California 94085 (US)**

(74) Representative: **Zimmermann, Tankred Klaus et al
    Patentanwälte Schoppe, Zimmermann,
    Stöckeler, Zinkler & Partner
    Postfach 246
    82043 Pullach (DE)**

Remarks:
    This application was filed on 03-01-2014 as a
    divisional application to the application mentioned
    under INID code 62.

(54)  **Single-pass, heavy ion fusion, systems and method**

(57)    A particle accelerator system comprises a source assembly for emitting a stream of isotopic slugs, each slug comprising a train of microbunches, at least one RF (radiofrequency) accelerator section for receiving said slug stream and focusing, accelerating and funneling said slug stream until a plurality of high-current, parallel slug trains emerges, a telescoper for receiving said plurality of high-current parallel slug trains and emitting different isotopic species into a single common-rigidity beamline so that said species arrive at a fusion target in a specified sequence, at least one snugger for receiving said common-rigidity beamline and snugging slugs within said common-rigidity beamline until they drift to points at prescribed distances from at least one target in at least one reaction chamber.

FIG. 1

**EP 2 722 851 A2**

## Description

### CROSS-REFERENCE TO RELATED APPLICATIONS

This application claims benefit of U.S. provisional patent application ser. no. 61/061,593, filed June 13, 2008, titled "Heavy Ion Fusion" (attorney docket no. ARCA0002PR), the entirety of which is incorporated herein by this reference thereto.

## BACKGROUND OF THE INVENTION

### FIELD OF THE INVENTION

In a general sense, the invention is related to fusion power systems. More particular the invention is related to single-pass, heavy ion fusion, system and methods.

### BACKGROUND INFORMATION

The heavy ion driver defined in 1975 by R.L. Martin and A. W. Maschke used the known abilities of high-energy RF (radiofrequency) accelerator systems to store megaJoule quantities of ion beam energy and to focus this stored energy on very small spots. They saw that the short stopping distance of nuclei with high atomic number (Z) at one-half the speed of light meant being able to create the energy density in small targets containing fusion fuel as needed to ignite small clean-fusion explosions and produce fusion power. And they showed that the continuous stored beams could be rearranged into multiple bunches, compressed in length, and delivered to the targets in short duration pulses as required by the dynamics of the fusion ignition and burn processes.

Beams of protons can be accumulated-and stored-over a long period of time, as the protons resist processes that cause them to wander from their controlled paths, such as knock-on or multiple scattering, and have low probability of changing their charge to 0 (neutral) or negative (H-). On the other hand, the probability of the charge state of a heavy ion changing by collision with an atom remaining even in a very high vacuum requires ignition pulses be generated in a fraction of a second. This is consistent with the need for an ICF (inertial confinement fusion) power plant to pulse frequently, and pulsing many times per second is routine for accelerator systems. However, the need to generate an ignition pulse within a limited time places a constraint on the accelerator technology that eliminates slow pulsing machines like synchrotrons.

Thus, at the inception of heavy ion fusion (HIF), a few principles were established:

- GeVs of energy in each ion provided means to generate beam pulses to ignite ICF burn with: much higher total beam energy, tight focusing properties, and beam currents required to to well-confirmed processes;
- Rearrangement of the total beam for an ignitor pulse into the short time duration required for the fuel compression and ignition processes is the technical issue;
- The question for economics is the cost of large particle accelerators, which does not fit conventional ideas of electric power generation;
- One accelerator has the ability to produce many times the output of a conventional power plant, which results in low cost per unit of energy;
- Favorable economics is obtained by capitalizing on this by using the high-grade heat at high temperatures to produce hydrogen and synthesize liquid fuels and lower the cost of other energy-intensive industries such as steel and aluminum.

### Current Amplification Processes used to Generate Heavy Ion Fusion Ignition Pulses

Accelerating heavy ions solved the problem of depositing the megaJoules of beam energy in small fusion targets. The beam energy also must be delivered to the targets in pulses with the short durations, e.g. of the order of 10 nanoseconds, consistent with the timescale of igniting small fusion explosions by rapidly compressing and heating to ignition so that fusion burn is effected before the compressed and heated fuel is able to fly apart. Using processes verifiable by the same analytical tools at the root of the design of all successful accelerators, Martin, Maschke, and others defined examples of systems to reconfigure the beams and deliver them to the target on this time scale.

Key to the repeatable, reliable, and efficient generation of tightly focusable beams of high-energy ions are physical "conservation laws" as firm as the more familiar relationships $E=mc^2$ or $F=ma$. These physics constraints, stemming from the same basis as the well-known field of thermodynamics, are summarized in the statement that the final focusability of the beams can not be better than that defined by the volume of "6-dimensional phase space" defined at the start of the beam generation process. Four of the six dimensions of this "space" are the two conventional, Euclidean dimensions transverse to the direction of the beam, coupled with the angles of the trajectories relative to a nominal ion on the axis and moving parallel to it. The two other dimensions are the difference between the energy of a particle and the nominal (ideal) energy and the width of the phase space ellipse on the time axis.

"Ballistic" focusing of charged particle beams is analogous to focusing beams of light: the spot size depends on the parallelism of the particle's paths coming into electromagnetic lens, the aperture of the lens, and aberrations. The effect of focusing a particle beam that has a range of momentum per particle is similar to the "chromatic" aberration of focusing light with a variety of wavelengths (or photon energies, or "colors"), shown graphically in the spectrum from a prism, and the term chromatic aberration also is used in "particle beam optics".

The individual current amplification processes and proposed HIF "point" designs were intensely vetted from 1975-80. Validation of the beam compaction processes led to a shorthand manner of summarizing their individual contributions by the following equation showing how the total beam current delivered to the target results is built up from the current produced by a single ion source:

$$I_{t\,arg\,et} = I_{source} \times N_{sources} \times N_{injection} \times N_{compression} \times N_{beams\_on\_t\,arg\,et} \cdot \qquad (1)$$

The beam power on the target is the product of the current of particles and the energy per particle. Ignitor pulse power of about 1PW (one petaWatt or one billion megawatts) is needed for ignition. That can be provided, for example, by 20GeV ions with a total current of 50kA (kiloamperes), divided among some number of beams.

Another means of amplifying the eventual current (introduced in 1978 by Burke) accelerates ions of multiple isotopes. This method effectively multiplies the 6-dimensional phase space available to the designer, since the physics constraint applies separately to each isotope. The motivation for the multiple isotope technique was to gain design margin and relieve pressure on other techniques for beam amplification / compression / compaction. However, the potential ways to use this additional design factor to best advantage were not aggressively explored, and only formally adopted in an internationally vetted "point" design in 1995-97.

**SUMMARY**

A single-pass heavy-ion fusion system includes a new arrangement of current multiplying processes that employs multiple isotopes to achieve the desired effect of distributing the task of amplifying the current among all the various processes, to relieve stress on any one process, and to increase margin of safety for assured ICF (inertial confinement fusion) power production. Energy and power of the ignition-driver pulses are greatly increased, thus increasing intensity of target heating and rendering reliable ignition readily attainable. The present design eliminates the need for storage rings. Further innovations are to give the HIF (heavy ion fusion) Driver flexibility to drive multiple chambers in the most general case of different total distances between the linac output and each of the various chambers. Using multiple chambers steeply decreases the pro-rata capital investment and operating costs per power production unit, in turn decreasing the cost of power to users.

**BRIEF DESCRIPTION OF THE DRAWINGS**

Fig. 1 provides a diagram of a HIF driver and a single-pass HIF system;

Fig. 2 provides an illustration of a chamber and protection of the chamber from neutrons by lithium sabots and liquid lithium sprays;

Fig. 3 provides an Illustration of a lithium sabot configured to cause expansion in preferred directions, such as along the axis of a cylindrical containment vessel;

Fig. 4 illustrates protection of a spherical reaction chamber from neutrons by lithium streams;

Fig. 5 provides an illustration of a reaction chamber environment at an early stage of lithium plasma expansion approximately one microsecond after the fusion energy release;

Fig. 6 shows a schematic arrangement for a energy conversion to electricity by a non-contacting, topping-cycle:

Fig. 7 provides a diagram of Pulsed direct energy conversion involving transmission, handling, and processing technology for timescales of approximately 10 microseconds;

Fig. 8 shows a reaction chamber with lithium restored to receive a fusion energy release, with vacuum restored to allow propagation of a HIF (heavy-ion fusion) ignitor pulse;

Fig. 9 provides an illustration of a cylindrical containment vessel and primary ancillary elements, principally primary heat exchangers, fuel injector, and vacuum pumping for exhaust of reaction products and the fraction of the fuel that remains unreacted;

Fig. 10 provides a high-level block diagram of an HIF driver;

Fig. 11 provides a detailed block diagram of the HIF driver of Fig. 10;

Fig. 12 provides a diagram of source, HVDC (high-voltage direct current) and beam structure;

Fig. 13 provides a diagram of pulse structure from isotopic sources and an HVDC preaccelerator;

Fig. 14 provides a diagram of pulse structure in an RF accelerator;

Fig. 15 illustrates a current amplification method by funneling microbunches;

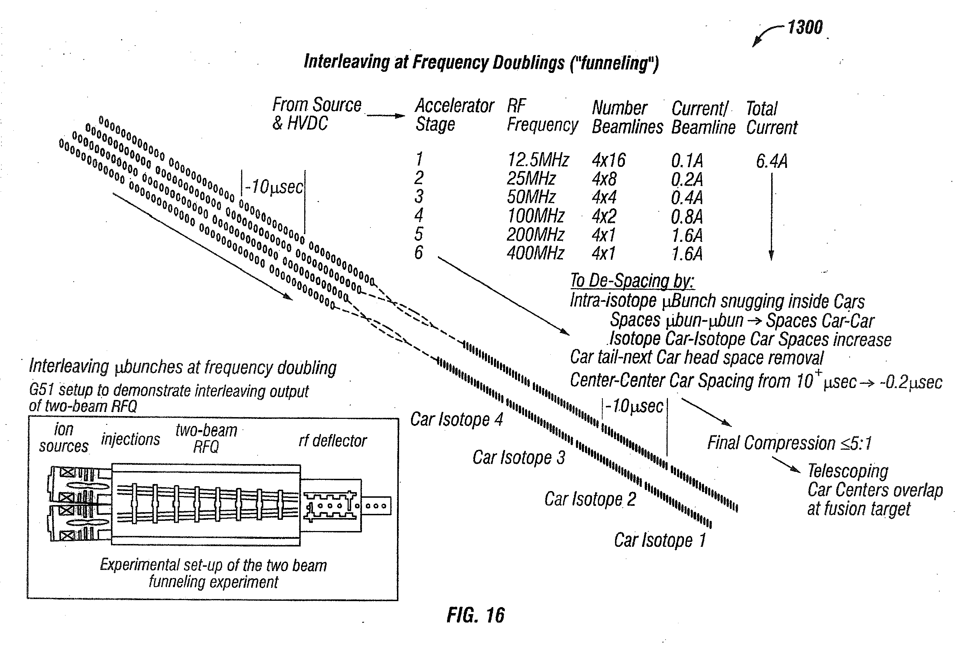

Fig. 16 provides an Illustration of beam temporal structure in a section of the linear accelerator that includes interleaving microbunches at a frequency doubling;

Fig. 17 illustrates lengths and spacings of slugs using three species for illustration;

Fig. 18 provides a diagram illustrating microbunches differentially accelerated by offset RF frequency;

Fig. 19 provides a diagram illustrating snugging and snug-stopping;

Fig. 20 provides a diagram illustrating differential acceleration by offset RF frequency;

Fig. 21 provides an illustration of increasing gap between slugs by snugging;

Fig. 22 provides a diagram of a helical delay line (HDL);

Fig. 23 provides a diagram of microbunch motion downstream from a slicker;

Fig. 24 provides an illlustration of potential minimum slug duration by slicking;

Fig. 25 provides an illustration of slicking achieving an ideal result;

Fig. 26 provides an illustration of an optimal slick effect; and

Fig. 27 provides an illustration of wobbler risetime compared to a time gap between slugs having a large difference in speed.

## DETAILED DESCRIPTION

A single-pass heavy-ion fusion system includes a new arrangement of current multiplying processes that employs multiple isotopes to achieve the desired effect of distributing the task of amplifying the current among all the various processes, to relieve stress on any one process, and to increase margin of safety for assured ICF (inertial confinement fusion) power production. Energy and power of the ignition-driver pulses are greatly increased, thus increasing intensity of target heating and rendering reliable ignition readily attainable. The present design eliminates the need for storage rings. Further innovations are to give the HIF (heavy ion fusion) Driver flexibility to drive multiple chambers in the most general case of different total distances between the linac output and each of the various chambers. Using multiple chambers steeply decreases the pro-rata capital investment and operating costs per power production unit, in turn decreasing the cost of power to users.

THE FUSION ENERGY ENTERPRISE

The evidence now is overwhelming that a new source of energy that is both clean and abundant must begin replacing fossil fuels in about ten years, and have scaling properties that allow worldwide build-out to meet energy and environmental needs by 2050.

Properly sized fusion sources each will produce the equivalent energy flow of a "supergiant" oilfield. The cost per unit of energy product from the HIF heat source will be affordable, clean energy at or below the current cost of coal, as one capital intensive fusion Driver will serve a multiplicity of power chambers. The cost of a HIF heat source will be comparable to the cost of developing a large oil field, of which very few rise to the supergiant category, and have a rule-of-thumb annual operating cost of 10% of capital cost, over a long lifetime. The cost of fuel raw materials is negligible, and fuel cost is associated with the capital cost of the fuel processing systems.

At least three phenomena comprise the basis of the Fusion Energy Enterprise.

1. Predictability of fusion energy release

The physics of dynamic, inertially-confined fusion ignition and burn are known technology. Scaling laws specify the requirements of power deposition intensity, the amount of energy input in a given time to a given mass of target material. Scaling down requires increasing degrees of fuel compression. Compression is challenging, but experiential data confirms computer models. ICF (inertial confinement fusion) Drivers using beams of high-energy heavy ions (the HIF Driver) avoid whole arenas of issues. One major arena is the interaction of intense laser light with matter. Similarly, the limits of pulse energy, repetition rate, and efficiency are factors of ten greater for high-energy heavy ions as for laser beams.

2. Availability of high-energy heavy ion Driver operation

Beams of high-energy heavy ions (the HIF Driver) have been known since the 1970s to be capable of meeting the requirements for fusion energy release. Over the intervening three decades, the advance of the state of the art in a wide variety of technologies, electronics, control software, modeling and design software, and more, has removed time from the to-go schedule for fusion power production.

3. Availability of a clean reactor-power chamber system

Although much cleaner and more abundant in principle than fission energy, fusion energy is nuclear energy. Design of the reaction vessel must avoid the disadvantages of materials activation and degradation by neutrons from the fusion reactions. A crucial feature of the ICF (inertial confinement fusion) approach is the stand-off distance achieved by beaming ignitor pulses via energy carriers, such as ions of high atomic number or photons. The complex means of achieving fusion energy release are physically separated from the reaction vessel. This freedom of design for the containment vessel has enabled configurations that avoid materials activation and degradation to the extent that lifetimes will be at least thirty years.

**Lexicon of Novel and Key Terms**

New terms are coined where indicated to facilitate description by removing the ambiguity that is unavoidable as a result of using existing terms for new purposes. In particular, "beam compression", "beam compaction", and the like apply to the whole beam generation process and to each of the steps that contributes to the process. Where new terminology is used, the convention will be to capitalize the terms. In addition to the novel terminology, the following lexicon includes some conventional terms to clarify possibly subtle meanings and as a convenience for the reader.

**Beamline:** A beamline comprises an arrangement of magnets that guide the beam down a vacuum tube, tube included. Several supporting things are implicit: instruments to measure the beam properties without degrading them; vacuum pumping; power supplies; associated controls; etc.

**LEBT:** This stands for sections of beamline for low energy beam transport. The HIF (heavy ion fusion) Power project predicates industrialization in which operating ranges are tightly fit around design nominal values, in contrast to maintaining the flexibility of multi-purpose research accelerators, which employ tunable low energy transport to match the beamline's transmission properties to beams of a variety of different beams, using source technology that is periodically changed to support evolution of the research mission, etc. HIF power performs the task of transporting the beams at low energy, but integrates the acceleration stages for compactness, improved reliability through fewer parts, and some cost avoidance.

**Master timing:** Two parts: 1. An absolute time reference to coordinate Driver functions with Fusion Power Chamber functions and 2. Top-level coordination of Driver functions internally. Master Timing 1. is initiated by signaling from the fuel injection system, because the accelerator response time is on a much finer scale than that for the schedule of way-points for fuel injection. Master Timing 2. is coordinated by harmonic relationships between the individual RF systems that perform individual functions in the beam generation process.

**Compression or Compaction (relating to beam):** In common with all ICF drivers, the goal of the processes used to generate ignition pulses is to concentrate / compress / compact MJs of "wallplug" energy in the driver's delivery vehicle to be deposited in cubic millimeters of target material in nanoseconds.

**Compression (relating to fusion fuel):** The definition of compression is the ratio of the fuel density at the onset of fusion to the fuel density before compression. Compression is a critical challenge for driver technologies, and classified for decades. Compression is key to the criterion of propagating burn, which is the means to achieve a high ratio of energy out to energy in. The primary mechanism for propagating burn is redeposition of the energy carried by the helium nuclei that is one product of D-T fusion. This gives the range of the helium nuclei in the fuel around its point of origination as a key parameter for the onset of propagating burn. Stopping the helium ions and comprehensive theoretical and simulation treatments, plus weapons technology and ICF research have established a parameter involving the characteristic dimension of the heated zone and the density of the fuel within that zone.

$$\text{Density x Length} = rho{\bullet}R = 0.2\text{-}0.5gm/cm{\wedge}2$$

The length parameter decreases as density increases. For spherical geometry (similar for cylindrical), the mass that must first be heated to ignition if propagating burn is to start is:

$$\text{Mass} = \text{Volume x Density} = (4/3)\pi R{\wedge}3{\bullet}rho$$

The parameter has key implications, most centrally the required degree of fuel compression.

In terms of the propagating burn parameter, the mass is:

$$R{\wedge}3{\bullet}rho = (rho{\bullet}R){\wedge}3/rho{\wedge}2$$

Thus,

$$\text{Mass} = \text{Constant}{\bullet}rho{\wedge}2.$$

In terms of the characteristic dimension, of interest relative to technological capabilities for expediting propagating burn:

$$R{\wedge}3{\bullet}rho = R{\wedge}2{\bullet}(rho{*}R)$$

Thus,

$$\text{Mass} = \text{Constant}/R{\wedge}2.$$

The energy that must be deposited to raise the burning fuel is ~kT times the number of particles in the plasma fuel, in standard fashion. To reduce the amount of fuel that must be ignited, to bootstrap surrounding fuel into propagating burn, increasing the density is the mechanism.

From these relationships, a critical advantage accrues for heavy ions to accomplish Fast Ignition with Telescoping Beams. For instance, the Isotopic Species for the Fast Ignition Pulse may be selected to heat a tailored mass of precompressed fuel.

**Microbunch:** The beam in a radio-frequency accelerator is composed of packets of beam particles (ions, electrons, or other charged particles). Each RF cycle of the accelerator provides the same acceleration to each microbunch. The present term is used interchangeably herein with the term "micropulse".

**Macropulse:** A train of microbunches.

**Isotope, Isotopic Species:** Ions that have identical nuclei.

**Ion Species:** An Isotopic Species that may be identified further by the charge state of the ions.

**Ion Source Hotel:** An integrated cluster of ion sources including one for each Species, and for the Species of both the Compression Pulse and the Fast Ignition Pulse (if employed).

**HVDC preaccelerator:** Acceleration to high energy is by RF processes. Before RF processes can be applied, however, the speed of the beam must be raised to a value that corresponds to the synchronous speed required for a practical RF accelerator structure. Critical characteristics that are imprinted on the beam at is origin are strongly dependent on the voltage of the preaccelerator.

**Marquee RF Linac:** The Marquee Linac facilitates acceleration of the space-charge dominated low velocity beam by omitting bending of the beams at the lowest velocity where beamline magnetic guidance and focusing fields are least effective. The Marquee linac structure has an array of parallel bore tubes. Each tube in the Marquee carries only one Isotopic Species of beam. The bore tube array of the Marqee Linac matches the bore hole pattern of the Source Hotel and the accelerating column in the HVDC preaccelerator. The beams of specified Isotopic Species in the array of bore tubes move in a programmed temporal sequence. The beams in temporal sequence that are in parallel beam tubes in the Marquee are fed into a single beam tube (one per Marquee) for following beam pulse generation processes.

**Telescoping:** A process that accelerates a variety of different isotopes in individual macropulses in a sequence timed to cause the various isotopic macropulses to telescope into eachother in order to arrive at the fusion target simultaneously or with a programmed sequence of arrival times that achieves a desired ignition pulse power profile. Beams of different Isotopic Species propagate in a common beamline, with static magnetic steering and focusing, as a result of accelerating different Isotopic Species to correspondingly different energies such that all isotopes have the same magnetic rigidity, a function of ion mass, speed, and charge state. Telescoping at the fuel target is the payoff for accelerating a multiplicity of Isotopic Species, which multiplies the six-dimensional phase space available to the designer.

**Telescoper:** The last section of the linear accelerator has provisions to emit different Isotopic Species with a common magnetic rigidity. This causes the Slugs of various Isotopic Species with different masses to have the different speeds as needed to arrive at the fusion target a specified sequence. The control program for the Telescoper's RF waveform adjusts the time gaps between Slugs in each Ignition Pulse so that the various Slugs arrive according to a specified schedule at the fusion fuel targets in Multiple Chambers at various distances from the Telescoper.

**Merging:** Multiplying the current in a single beam by directing simultaneous parallel beams into a common magnetic beamline with an attendant increase in transverse emittance.

**Slug:** A macropulse of one of the isotopic species designed for telescoping beams. A Slug is formally identical to a Macropulse. The term "Slug" or "Slug Species" or "Slug Macropulse" is used to avoid confusion.

**SubSlug:** A Slug may comprise a small number (e.g., four) of identical parts called SubSlugs. The SubSlug structure may be created by a gating electrode on the ion source, a "beam chopper" in the early portions of the accelerator, or a combination of both. The SubSlug structure sets up the current amplification steps of Merging and Loop Stacking.

**SlugTrain:** A complete series of Isotopic Slugs. An ignition pulse may comprise more than one Slug Train, to enable heating a fusion target with beams coming at the target from more than one direction. The Isotopic Species and the Microbunches in the Slugs of different Slug Trains are identical, but the sequence of spaces between Slugs in different Slug Trains may be different, if needed to accommodate different total beamline lengths to the fusion targets.

**Loop Stacking:** Uses a 360 degree bend in the beamline to return a SubSlug to the start of the Loop parallel to the input beamline in synchronicity with the next following SubSlug. The result of Loop Stacking is to multiply the number of beamlines (e.g., one-Loop Stacking doubles the number of beam lines) in a once-through process, in contrast to multi-turn injection in storage rings that stacks beams in transverse phase space in a storage ring's single boretube.

**Snug:** The process of moving the individual Microbunches within each Slug closer together.

**Cradling:** A feature programmed into an RF waveform involving a dynamic frequency shifting, in particular the dynamic frequency shifting used for Snugging. The purpose of the feature is to maximize the efficiency of the Snugger by making it possible to use the widest swing of phases around the zero crossing.

**Snugger:** The accelerator section that effects the Snugging process.

**Bunch rotator:** Bunch rotation refers to the orientation of the phase space ellipse. The means to rotate the bunch in this sense is to work on the bunch with electric fields that vary in time so that ions in the bunch that pass a point at different times receive different accelerations. The purpose of interest is to handle the conserved phase space volume to retain the focusing to a spot while also manipulating the ions of the beam to arrive within the necessary pulse duration.

With the conventional definitions for the longitudinal phase space, the horizontal axis represents time and the vertical axis represents momentum. The phase space of a collection, of particles (in this case, heavy ions) is "a constant of the motion". In an RF accelerator, the phase space of the bunches evolves as in an elliptical shape that can be squished on one axis and will respond by stretching on the other axis.

If a bunch is tall and skinny (as all are in the above graphic), that means the momentum spread is at a relatively large value and the time spread must be correspondingly at a relatively small value. Momentum spread results in chromatic aberrations, which must be within some limit (like 1 %) if the bunch is focused to a small spot. If the momentum spread is too large, the chromatic aberrations may be the parameter that determines spot size.

If a phase space ellipse is left alone to drift, the higher momentum particles will move ahead and the lower momentum particles will fall behind. The effect is that the ellipse will shear along the axis.

**Bunch reflector:** The purpose of reflection is to reset the phase space ellipse so that it repeats the shear (described above) as the bunch lives and moves forward. One repeats the process, like Groundhog Day, until you get the bunch to where you want it to go.

Whereas "bunch rotation" connotes "laying the bunch down" on the time axis to minimize the momentum spread at the expense of time spread, bunch reflection rotates the bunch into its mirror image in either axis. Since it is not physical to reset the position of the bunch in time, physically, the reflection is done by shearing the bunch via the applied electric field - that means that the leading tip that is at the highest momentum spread is sent down through the axis to an equally negative momentum spread. Thus, the particle at the leading tip which has been fastest becomes the slowest and begins falling toward the back, while the particle at the rear that was the slowest becomes the fastest and begins moving toward the front.

For illustration, the HIDIF design rotates the bunch after it shears in phase space during a drift distance of 160m. With the same parameters, a reflector would be needed every 320m. It will be a bit easier technologically to reflect the bunches more frequently, as the HIDIF pushes the phase width of the bunch at the time when rotation is applied to the extent that they have to fabricate a sawtooth waveform to knock the ellipse down - i.e., to rotate it. They do that to get the longest length along the time axis, and therefore the lowest momentum spread. What we want to accomplish can be done with much simpler demands on the RF waveshape.

**Snug Stopper:** The snugging process is stopped temporarily to allow the microbunches to maintain their positions in the individual Slugs, while the Slugs "drift" to points at prescribed distances from the targets in multiple reaction chambers.

**Helical Delay Line (HDL):** A coiled length of beam line. All Slugs exit the Delay Line at approximately the same moment. The specific timing of the various Slugs is set to: a. allow time for a pulsed magnet to switch the slugs of different species a common beamline, in which the continue to the fusion target. The schedule of arrival of the various Slugs (in each SlugTrain of an Ignition Pulse), set at the Ion Sources and coordinated with the waveform of the RF power, results in Slugs arriving at their respective exit ports and, in turn, at the switch magnets to become realigned in the SlugTrains in closer succession, with the spacing schedule set for Telescoping to culminate at the fusion fuel targets. The HDL carries multiple beams in parallel beamtubes, guided and focused by fields from magnets that are integrated into a compact and economical array. Design of the beamlines, with switch magnets, at the exit port locations accommodates switching the Slug from each of the parallel beamlines into a corresponding individual beamlines that continue the array of parallel beamlines to the point where they are reinserted into beamlines that continue to the Multiple Chambers with no further change to the number of parallel beamlines.

**Slicker:** Restarts the Snugging process at a distance ahead of each chamber such that the Microbunches will complete a specified slide over each other to provide the desired current profile at the pellet. The Slick process is subject to the constraints of the Liouville's Theorem. Simultaneous with progress of the Slicking process, individual microbunches stretch (or "shear") while the area of the longitudinal phase space ellipse remains constant. The result is that individual microbunches become longer, skinnier ellipses in the longitudinal phase space as they simultaneously approach the fusion target and slide on top of one another.

**Fast Ignition:** A class of fusion target designs that separates the two processes of (a) fuel compression and (b) fuel ignition. Heavy ion beam driver systems can be designed with or without the Fast Ignition feature. Fast Ignition improves the overall efficiency of achieving both the fuel density and ignition temperature requirements.

**Compression Pulse:** The portion of the driver pulse that drives the processes that compress the fusion fuel.

**Fast Ignition Pulse:** The portion of the driver pulse that is focused into the approximate center of the precompressed fuel. The duration of the Fast Ignition pulse is characterized by the length of time for the fuel to disassemble, about the time for the fuel density to drop by a factor like two.

**Ignition Pulse Profile:** The series of arrival times of different Slugs at the fusion targets is set so as to form the temporal shape of the pulse at the target that most effectively "drives: a. the fuel into a compressed state, b. heats the fuel to ignition, or c. performs both a and b in an integrated process of compressing and heating.

**Multiple Chambers:** HIF fusion power is most economical if a single heavy ion driver system ignites fusion pulses in a repeating sequence in multiple fusion chambers. In the most general layouts of multi-chamber fusion power parks, the distance from the accelerator varies from chamber to chamber. The dynamic beam generation processes must accommodate the variety of distances.

**Final focusing lens:** Final focusing means the focusing outside the wall of the chamber that then lets the beam fly ballistically to the target. The term 'final' distinguishes this from the many points where the beam is "focused" during transport (in "strong focusing" transport beamlines) to keep it from spreading.

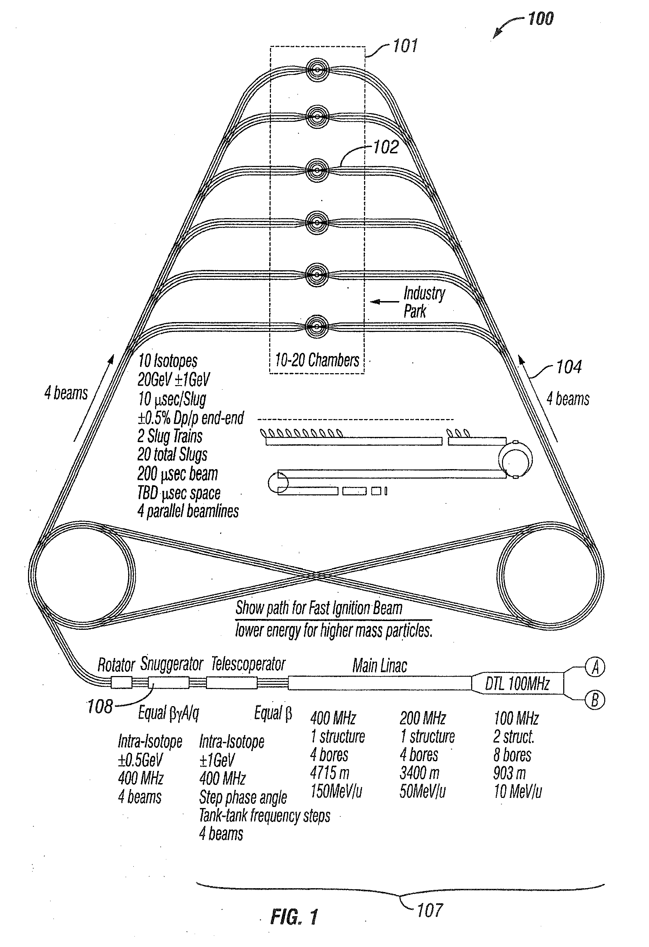

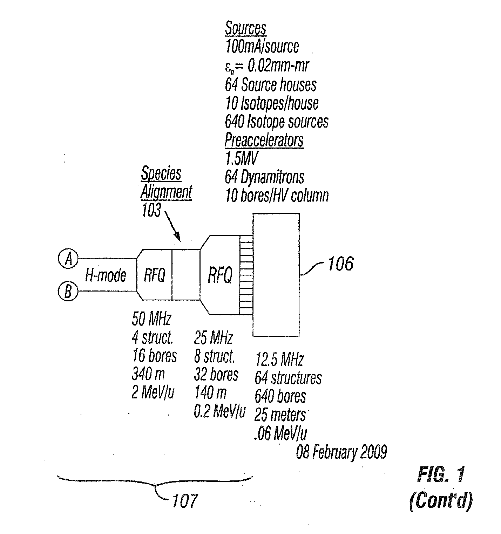

Figure 1 shows a diagram of a heavy-ion fusion system 1000, known herein as an "Energy Park", incorporating the innovations described herein below. In brief, the system includes a plurality of reaction chambers 1002 in which pulses of heavy ions are directed to pellets of fusion fuel. In the embodiment show, the reaction chambers 1002 are grouped in a system 1001 known as "Industry Park". As described herein below, the pulses occur in two phases: a compression pulse that compresses the fuel pellet, raising the internal temperature of the fuel; and a fast ignition pulse, which increases the energy level in the compressed and heated fusion fuel to a point that a fusion reaction is induced. The heavy-ion beams 1004, 1005 are typically routed toward the reaction chamber along beamlines (also 1004, 1005). In one embodiment, each of the reaction chambers 1002 is serviced by two beamlines, each beamline delivering four heavy-ion beams. An accelerator 1003 includes an ion source 1006, an accelerator section 1007 and a current amplication module 1008, known herein as a "snugger". Ions are emitted from the source 1006 and received by the accelerator 1007, where in addition to being accelerated, they under other processing such as focusing, until they are emitted from the accelerator section and received by the snugger 1008. After being emitted from the snugger, the ions undergo further processing, described in detail herein below, before they are allowed to drift in the direction of the industry park 1001, comprising the reaction chambers 1002. Energy liberated as a result of the fusion reaction is coupled to a power plant for conversion to other forms of energy.

CLEAN REACTION CHAMBER INNOVATIONS

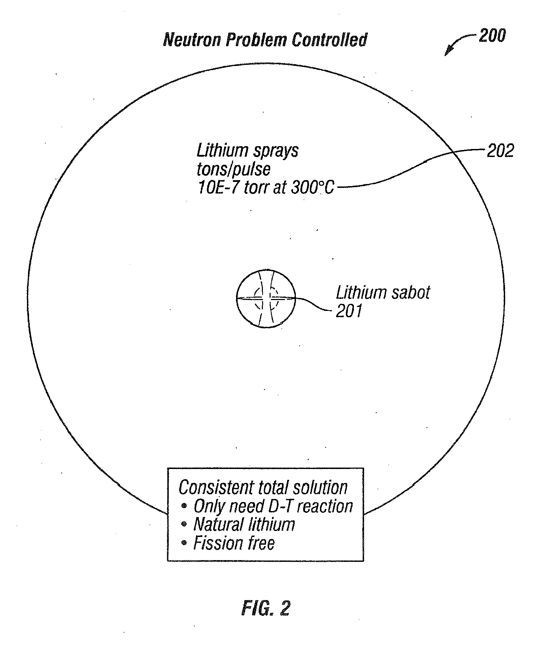

The HIF Driver delivers an Ignitor Pulse via a practical number of beams to the entrance ports into the Reaction Chamber (e.g. eight beams total, with four on each of two sides). The salient features of the chamber embody precautions taken to convert the 14 MeV neutron energy to heat without reaching the chamber 2000 walls. As shown in Fig. 2, this is accomplished by initiating the reaction with the fuel pellet inside a substantial body of lithium 2001. In the simplest example, this is a sphere of lithium about 60 cm in diameter, hereinafter known as a lithium sabot. Additional protection for the chamber 2000 is provided by lithium spray and droplets 2002.

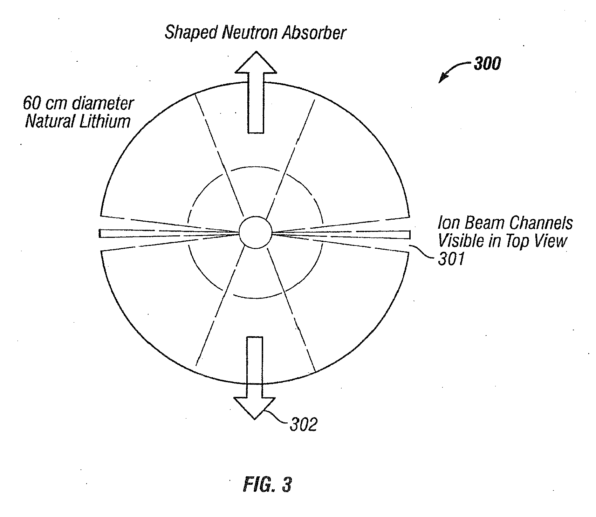

The lithium sabots 3000 also shield the fusion fuel targets at cryogenic temperatures from the elevated temperature in the reaction chamber. The fueltransporting sabots may be variously shaped and configured, with appropriate access holes 3001 for the heavy ion beams. In the embodiment of Fig. 3, the lithium sabot is spherical in shape, however other embodiments exist wherein the sabot assumes other shapes, cylinders or cones, for example. In all cases the thickness of the lithium must be at least 30 centimeters from pellet to the closest boundary of the pellet holder. Collisions between the neutrons and the lithium atoms over this radius coverts a preponderance of the kinetic energy carried by the neutrons to heat. Nuclear reactions of the neutrons with the lithium regenerate tritium, produce additional helium and more heat, and result in a preponderance of the neutrons being captured and denied access to the materials of the chamber walls. As shown in Fig. 3, the lithium sabot 3000 may be configured to cause expansion in preferred directions 3002, such as along the axis of a cylindrical containment vessel.

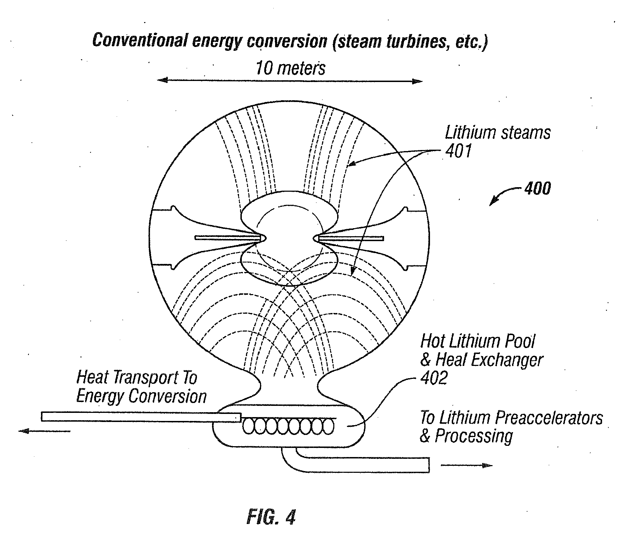

The reaction chamber 2000 can have various shapes from spherical to cylindrical to composite shapes of various conic surfaces. Figure 4 illustrates an internal view of a reaction chamber 2000, schematically illustrating a rain of protective lithium droplets 3000, is shown. A bounding envelope must withstand both high vacuum and moderate transient pressures and will be constructed from steel, and other materials. Leaching of alloy materials is avoided by materials contacting only lithium returning from the low temperature end of the heat exchanger. Additional lifetime is added to the chamber by cladding of alloy steels with simple iron on the surfaces facing lithium. Lithium flowing in conduits such as pipes and/or tubes also flows at, mainly, the low, incoming fluid temperature, approximately the melting point of lithium (130.5°C).

The heated lithium cools from a plasma state and eventually condenses in a series of phases, and the chamber is back to its 'cool' state ready for another reaction to take place in a fraction of a second. This requires pumping tons of lithium per pulse to cool and protect the chamber walls, e.g. approximately five tons for fusion releases of two BOE (barrel of oil equivalents) each, or 50 tons for twenty BOE releases. The heated lithium goes through the heat exchangers and returns as cool fluid to cool the chamber and re-establish the vacuum (low gas density) necessary for the ignitor beam to propagate across the chamber radius to ignite the next fuel target.

The total mass of lithium for each fusion pulse, injected into the chamber at flow rates tailored along the chamber's length for the desired temperature history, is sized according to the integrated scheme of fuel sabot injection, ignitor beam passage, fusion energy containment and conversion, expansion of the lithium, extinguishing the plasma, further cooling to heat transfer temperatures, and restoring the required pre-pulse environment. These phases compare to the processes of an internal combustion engine operating on chemical combustion:

- power stroke with power take off;
- exhaust of spent fuel charge;

- rejection of unused heat;
- fuel charge injection; and
- ignition.

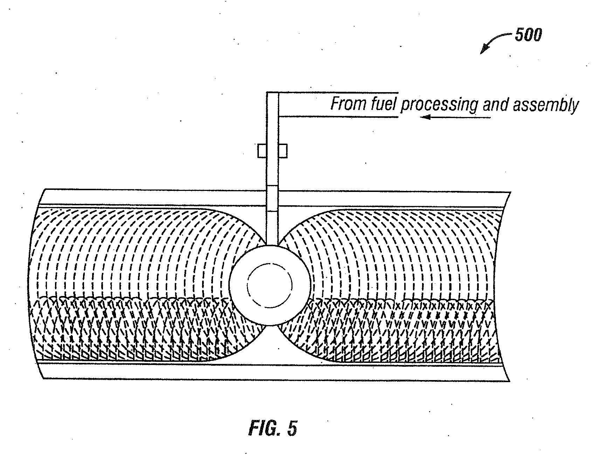

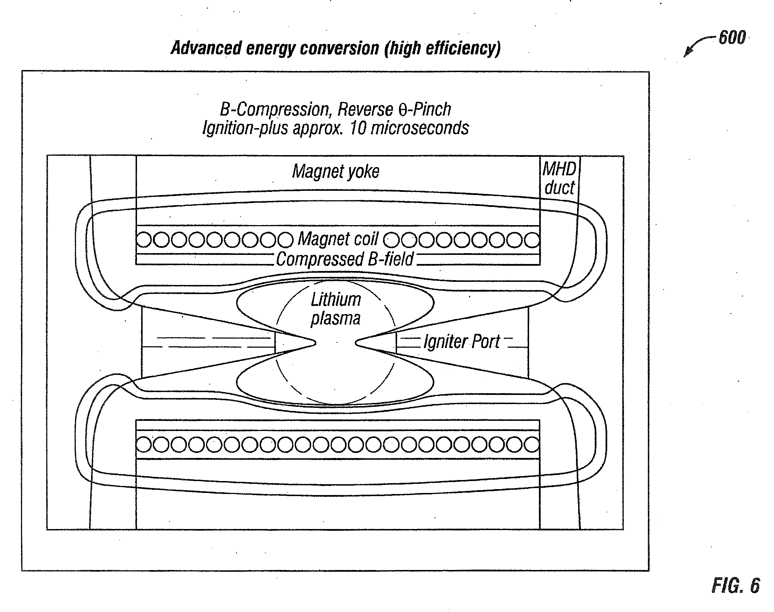

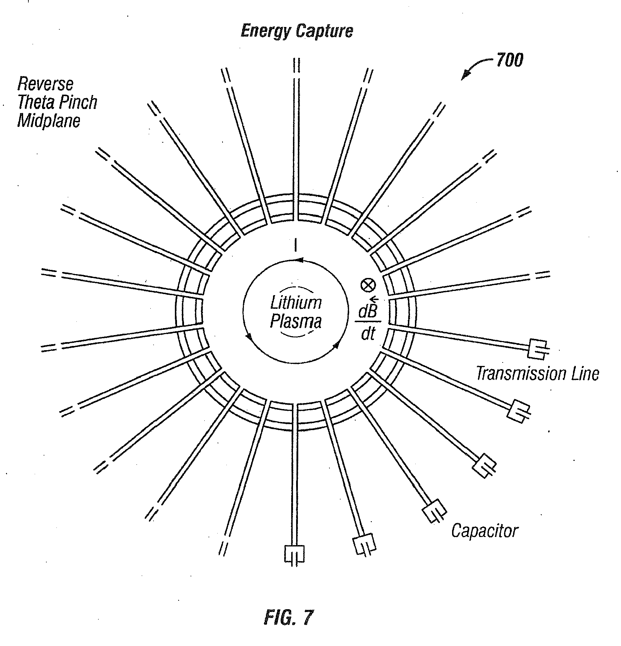

Figure 5 provides an illustration of a Chamber 2000 environment at an early stage of lithium plasma expansion around one microsecond after the fusion energy release. For illustration, fusion releases equivalent to the energy contained in two barrels of oil, absorbed in the lithium sabot, form electrically conducting lithium plasmas. Regarding the plasma as the thermodynamic working fluid at this stage, non-contacting means may be provided that operate with this extremely high temperature working fluid, to realize a topping cycle with a revolutionary increase in conversion efficiency. The novelty in the present embodiment of this energy conversion technique is that it applies to the combined heat of the electrically neutral neutron, which carries 80% of the total fusion energy release, as well as the electrically charged helium nucleus, which carries only 20% of the total fusion energy release. Figure 6 shows a schematic arrangement 6000 for a energy conversion directly to electricity by a non-contacting, topping-cycle. As shown in the diagram 7000 of Fig. 7, pulsed direct conversion involves transmission, handling, and processing technology for timescales of around 10 microseconds.

Neutrons are insulated from the chamber walls by flows and sprays of low temperature lithium returned from the heat exchanger 3001. A large chamber for producing 100 BOE, or more, per minute provides adequate gas dynamic expansion. The volume of the plasma that forms upon ignition of the fuel pellet at the center of the Lithium may be about 1440 cubic meters. Microseconds after the pellet undergoes Fusion the lithium surrounding the fuel pellet has vaporized to become Plasma whose energy is being harvested by direct conversion to electromagnetic fields and electric currents.

Further cooling and chamber wall protection is accomplished by filling the chamber volume with sprays of liquid lithium droplets. Out to a certain distance from the fusion burn, this lithium becomes part of the plasma. Further out, lithium is even vaporized. Lithium covering the walls protects the walls by ablation, and the lithium beneath the ablation boundary maintains the walls at the modest temperature of the lithium returned from the heat exchanger 3001 subsystem. Heat is not extracted through the main walls of the chamber, as the bulk of the heat flows towards the ends of the cylindrical expansion volume. The lithium working fluid progressively cools by interaction with lithium sprays along the axis of the cylindrical chamber, and condenses beyond the direct conversion zone. Condensed, hot lithium comes in contact with the primary heat exchanger 3001 and heat is transferred to a secondary fluid for use in processes located outside the primary containment, defined as the lithium boundary.

Exhaust of fusion reaction products concerns primarily the helium and tritium produced. Tritium is needed to fuel later D-T (deuterium-tritium) pulses. Tritium containment also is the chief radiological hazard of the entire HIF power system. The large body of knowledge regarding tritium safety is clear on the engineering requirements. The HIF chamber system economically accommodates several layers of redundant features to assure tritium safety.

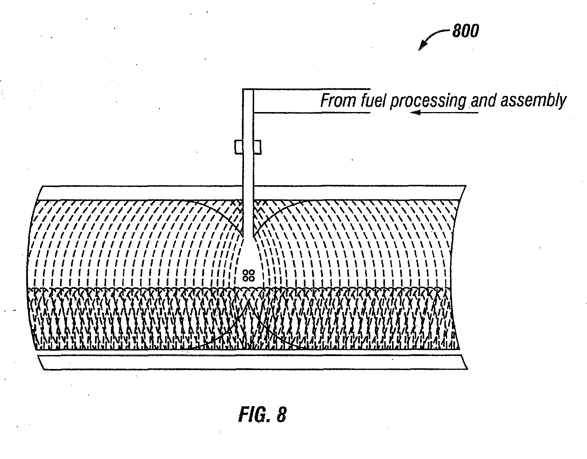

Prior to the next energy release, the low temperature lithium acts as a getter pump to scavenge lithium vapor left behind by the power and exhaust dynamics. Figure 8 shows a Chamber 8000 with lithium restored to receive a fusion energy release, with vacuum restored to allow propagation of the HIF ignitor pulse.

The temperature of the lithium progressively decreases as it functions to:

- capture a preponderant fraction of the neutrons and essentially 100% of their energy;
- to knock down the pressures of the explosive pulse; and

to convert energy to electricity in non-contacting, direct-conversion processes.

Lithium in liquid form at different positions in the reaction chamber experiences temperatures as low as 200 degrees Celsius to temperatures as high as 1200 degrees Celsius each time a pellet ignites, not counting the room temperature lithium of the fuel sabot or the temperatures of this and immediately surrounding lithium during the plasma state. This heat flux, along with the electrical energy extracted by direct conversion, is the major product of the fusion reaction. Secondary heat exchangers convert this heat to other products such as hydrogen gas for use in producing synthetic fuels, steam for use in conventional steam turbines, and heat for the desalinization of water by evaporation.

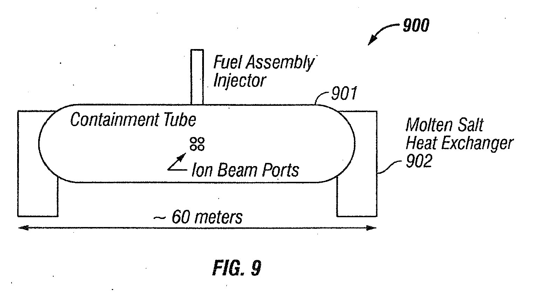

An external view 9000 of a cylindrical reaction chamber 9001 and its primary heat exchange system 9002 is shown in Figure 9; in addition, a fuel injector 9001, and vacuum pumping for exhaust of reaction products and the fraction of the fuel that remains unreacted (typically about half).

Because tritium is released to the working fluid during the reaction it must be recovered to meet governmental radiation safety standards and to provide the Tritium necessary for subsequent reactions. To assure that no Tritium is accidentally released to the environment, the whole of the reaction vessel and its heat exchangers is typically enclosed in a secondary containment vessel. This vessel may be filled with a gas that is not reactive with Lithium, for example Argon.

Supporting activities for the reaction vessel 2000 include:

- Lithium pumps;

- Pellet making facilities;
- Lithium sphere, or other carrier, manufacturing facilities;
- Tritium recovery facilities;
- Large vacuum pumps; and
- Secondary heat exchangers.

Of all of these supporting activities, only the secondary heat exchangers can be outside the secondary containment structure. All functions internal to the secondary containment are capable of operating remotely, for no oxygen or water or water vapor can be located where it could come in contact with the lithium. Lithium oxidizes rapidly in the presence of air and reacts violently when in contact with water.

OVERVIEW OF CURRENT MULTIPLICATION PROCESSES

Accelerator Driver Summary

Telescoping is exploited, e.g. 10 Isotopes for tenfold increase in working volume of 6-dimensional phase space. State of the art source technology is used.
A State of the art Preaccelerator HVDC of ~1MV is used , cf. Argonne National Laboratory 1976-80. A Linac emits multiple parallel beams, e.g. four.
Stacking in transverse phase space uses a low number, e..g. two in each transverse plane. Ignitor Pulses are generated with once-through accelerators and beamlines. Storage rings are not used. Microbunch structure is maintained all the way to the fusion fuel target, i.e., identity and integrity of each RF microbunch of ions is maintained. Macropulses of individual isotopes, called Slugs, contract (called Snug) due to differential acceleration in Snuggers, e.g. ±5% to ±10% of the nominal speed, using successive blocks of linear accelerator tanks operating at progressively higher frequencies, e.g. from 400Hz for first block and 4GHz for the last block.
The last sections of the Snugger, called the Snug Stopper, reverse the sense of the input Snugging voltage to return the nominal speed of all microbunches to the nominal speed of the Isotopic Slug. The beam passes through a Helical Delay Line that removes space from between Slug centroids by magnetically switching out successive Slugs from successive coils of the Helix, at programmed times such that, when they are reinjected into common beamlines, they take the next programmed step of power amplification.
This set of beamlines, e.g., four beamlines, continues to switch points that route the beams to one of the multiple fusion chambers. The differential distance to multiple fusion chambers is accommodated by the central timing program for computer-controlled operation. To provide two-sided target illumination, a set of two Slug Trains, each comprising a Compression Pulse and a Fast Ignition Pulse, are produced in series by the target for both Slug Trains. The accelerator may be timed such that drift distances and other parameters for Snugging and Telescoping simultaneously achieve maximum intensity timed in coordination with fuel target timing.
A low factor of emittance multiplication, e.g., 2.5x, realizes a step-change improvement for low emittance at the fusion fuel target. The Fast Ignition requirement of small spot diameter is enabled by the smaller emittance. Chromatic aberrations are controlled within practical limits by conservation of longitudinal phase space RF of the beam structure at the microbunch level, e.g., 1% momentum spread in the final focus lens.
Overall RF-based coordination produces and delivers Ignitor Pulses to fusion targets on absolute, end-to-end timing to the accuracy of a fraction of an RF period. Substantial timing errors are permissible, as the limit of the capability exceeds foreseeable requirements.
Programmed timing of the pulsing of the array of ion sources, HVDC, and RF power provides the large flexibility (bandwidth) of the design concept to dial-in the sequence of beam generation processes in the computer control program.

**Ignitor Pulse Structure and Timing**

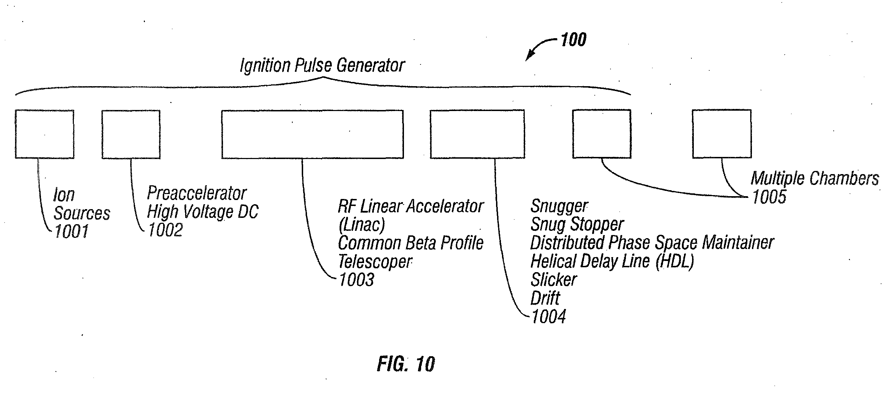

It is instructive to regard the Driver design from the vantage point of the controls system. This especially aids design illumination by providing a common framework to describe the manner in which the individual processes function and the requirements to coordinate them. Referring now to Figure 10, a top-level functional block diagram of HIF Driver 1000 is shown:

- ion sources 1001;
- preaccelerator HVDC (high voltage direct current) 1002;
- an RF linear accelerator section 1003;
- a current amplification section 1004; and
- multiple reaction chambers 1005.

The above design provides the timing accuracy to cause the various dynamic processes of beam generation to culminate at fusion fuel targets with including power profile and aiming, at fusion targets power profile and to meet the targets as they move through the target zone. The design also provides the timing flexibility required to achieve t specified Ignitor Pulse parameters, in Multiple Chambers. Overall Ignitor Pulse programming is able to vary the spacing of Isotopes based first on the speeds of the different ions a table of Isotopic Species. The timing for source gating is derived from the master clock of the RF synchronizer.

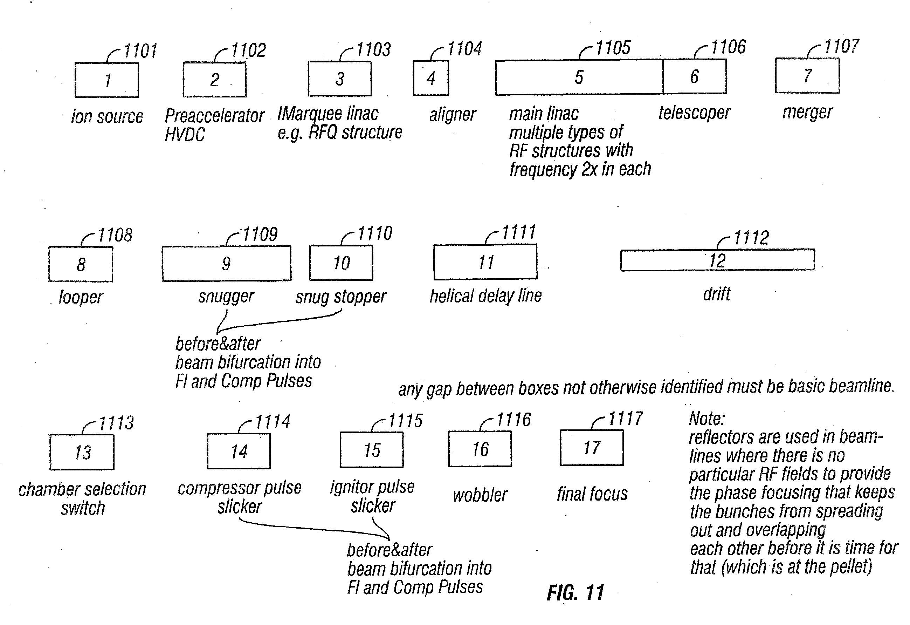

Fig. 11 shows a detailed block diagram of the HIF driver shown in Fig. 10:

- ion source 1101;
- preaccelerator HVDC 1102;
- RFQ (radiofrequency quadrupole) structure 1103;
- aligner 1104;
- main linac 1105;
- telescoper 1106;
- merger 1107;
- looper 1108;
- snugger 1109;
- snug stopper 1110;
- helical delay line 1111;
- drift 1112;
- chamber selection switch 1113;
- compressor pulse slicker 1114;
- ignitor pulse slicker 1115;
- wobbler 1116; and
- final focus 1117.

More will be said about each of the above components as the Description proceeds.

A beam diagnostics and accelerator controls system establishes accuracy of the arrival of the Ignitor Pulse to timescales for the Ignitor Pulse's temporal waveform, e.g. nanoseconds to tenths of nanoseconds. The accuracy of the absolute ("ZULU") arrival time of the Ignitor Pulse is determined by the speed and rotation rate of the fusion fuel target as it falls through the bullseye.

The Driver is computer operated, using centralized Master Timing via the coordinating effect of synchronizing RF waveforms. Distributed timing control provides realtime corrective responses, using for example the ability (provided by the ionic speeds being less than control signal propagation speeds) to feed-forward data about the beam position and other parameters. The state of the art for the precise timing and control of RF fields extends to approximately one part in ten thousand.

Delivery of a high current short duration pulse to the fusion pellet target located in each of many chambers at various distances from the source is depends on the pulse structure of the ion source. The precise timing of each beam to each chamber is unique and accounts for the distance to the chamber for the specific beam, the properties of all of the switches and accelerators in the beam path, and the precise lengths of each of the delay paths. It also may take into account the differences in mass of the individual isotopic species used in the ion beam.

When the properties of the pulse at the target are defined by the energy release needs of the fuel pellet, the challenge is to amplify the source ion current via the pulse structure and the accelerator properties to the magnitude required by the ignition parameters at the target.

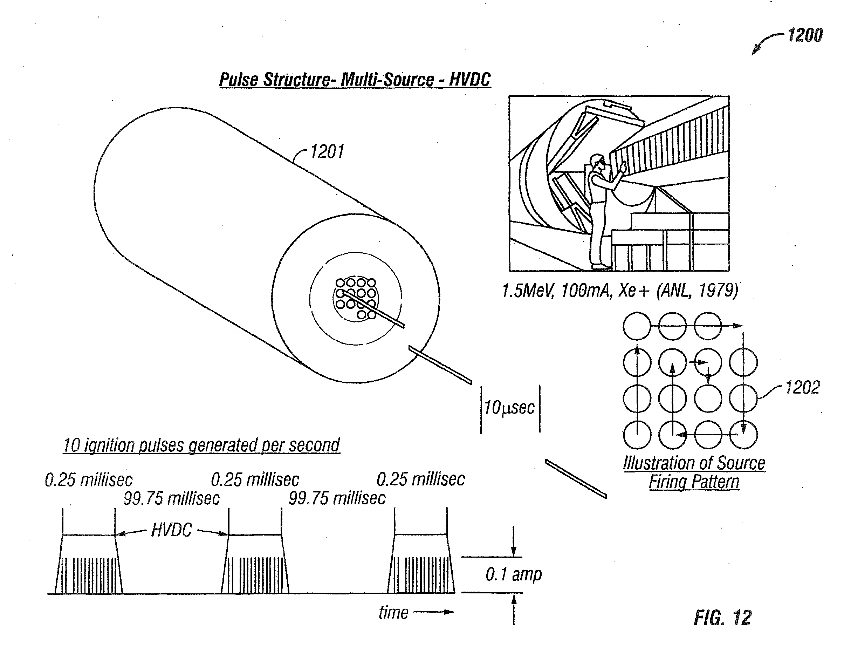

This amplification is dependent upon cascading a series of steps of current amplification as described in subsequent sections, but it is all dependent on the ion source current parameters and their precise timing structure as they leave the sources. The timing within the pulse structure 1202 that evolves as a result of the beam generation processes is set by the release of ions via grid gating at the source 1201. The heaviest ions are released first and are followed sequentially by each of the lighter species in descending isotopic mass order. One source for each of the isotopes is integrated into a compact structure called a Source Hotel 1201, as shown in Fig. 12.

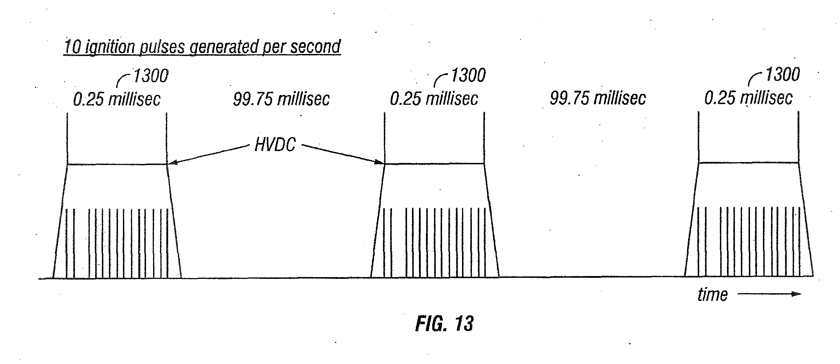

The ion source within a Source Hotel is gated to release identical duration macropulses 1300, Fig. 13 as a set of equal parts, e.g. four, of the feature of the beam structure called an Isotopic Slug. The Isotopic Slugs are sequential and do not overlap, propagating in parallel channels. The source beams are accelerated by HVDC in Preaccelerators, with one Source Hotel extractor integrated with the HVDC column electrodes in each Preaccelerator. The electrodes have a pattern of apertures that matches those of the Hotel. For purposes of illustration, the emission from sixty-four, state of the art Source Hotel-Preaccelerator assemblies comfortably exceeds the requirements of the most stringent Ignitor Pulse parameters.

The sequence of Isotope Slugs for the Fast Ignition (FI) pulse is emitted first (i.e., using heavier ions for the FI Pulse than for the Compression Pulse), with the first Slug containing the heaviest isotope. Next, the Slugs for the Compression Pulse are released after a pause in time determined by the velocity differences between the FI ions and the lengths of beamline determined by details of the series of beam generation processes. The timed release of each of the different Isotopic Slugs follows in descending isotopic mass order, with a schedule of delays between Slugs that is determined by the ion mass (which determines its speed in a series of isotopes by the Telescoping Condition of equal magnetic rigidity), the accelerator length, and the length of the beamline to a fusion target in a given reaction Chamber.

Each complete series of Isotopic Slugs forms a non-overlapping sequence of Slugs called a Slug Train. The total release duration for each Slug for the Compression Pulse (which many times the total energy as the Fast Ignition Pulse) is nominally 10$\mu$sec and the overall release time Slug Train lies between 400$\mu$sec and 500$\mu$sec, depending upon the distance to the most distant reaction chamber.

In the first RF accelerator section, the Slugs continue to be accelerated as parallel beams with the Source Hotel's array. All the accelerating channels are on, regardless of which channel a Slug is in at a given axial location and time. Visualized end-on, the emission of Slugs from the individual channels is similar to a theatre Marquee with only one light blinking at a time in a pattern with complex but specific timing.

Immediately downstream from the Preaccelerator, each macropulse enters the first section of the RF accelerator and is imprinted with the micropulse structure. The strength of the accelerating field over the entire linear accelerator is higher for Slugs with higher mass, to accelerate the higher mass to an equal speed at each point along the linac.

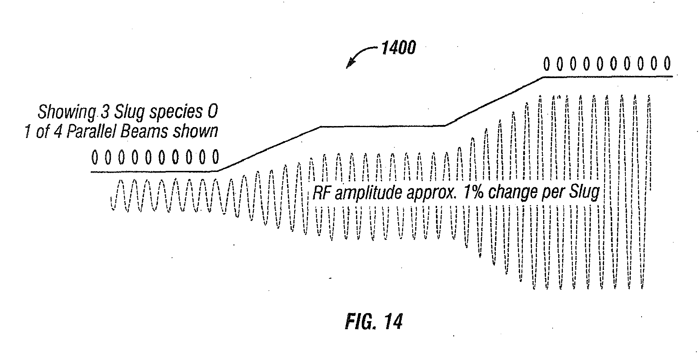

Referring now to Fig. 14, shown is a diagram 1400 of a pulse structure in the RF accelerator.

The first RF accelerator is a multi-channel radiofrequency quadupole, or RFQ, which integrates RF quadrupole electric focusing and acceleration. The RF field in the initia section of the RFQ provides strong focusing fields and smoothly increasing accelerating field to approach isentropic conversion of the DC incoming Slug beam into microbunches ($\mu$bunches) in a continuous stream at the RF frequency. For illustration, each $\mu$bunch contains a number of ions of the order of ten billion. An entire Ignition Pulse (e.g. carrying a total of 20MJ of ions that carry 20GeV (3.2nanoJoules) each) contains about eighty thousand of these elemental, $\mu$bunch groups of the energy-carrying heavy ions. The purpose for continuing the Marquee in the first stage of RF acceleration is to delay bending the beam until the speed of the ions is able to efficiently use magnetic focusing to handle the space charge forces associated with high beam current. The initial speeds of the heavy ions for HIF Drivers (i.e., in the front end) are especially slow because, to achieve the brightest beam, the preferred choice is for the ions to be singly charged.

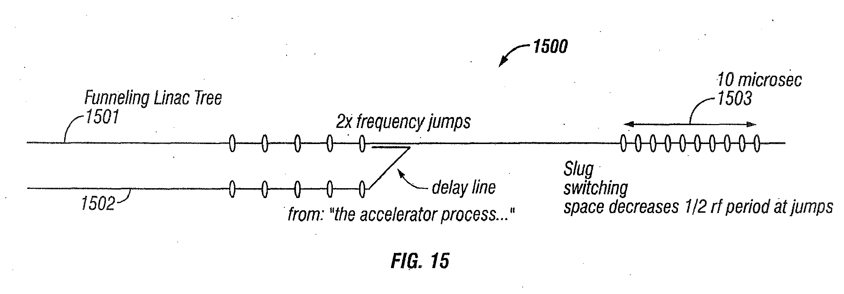

After the ion speed is raised in the RF accelerator section with the Marquee array of parallel Isotopic Slugs, the beam is fed to an accelerator section operating at twice the frequency of the RF Marquee, e.g. 12.5 MHz. Between the two RF structures, the beams from the Marquee are Aligned for insertion into the 25MHz structure as a collinear Slug Train. The array of the Aligner's magnetic beamlines, e.g. sixteen (nominally ten for the Compression Pulse and six for the Fast Ignition Pulse), are routed, one each, to a corresponding series of AC switch magnets (one on the Aligned beamline for each Slug) that bend the Slugs into a common, Aligned magnetic transport channel, in a Slug Train with the specified time structure. Prior art also describes an alignment process that integrates the interleaving (or funneling) of microbunches at the frequency doublings. Prior art further describes a process of interleaving two beams that smoothly integrates with the design of an RFQ accelerator. Using this concept, the Aligner also doubles the average current of a Slug. Fig. 15 provides a diagram 1500 showing the interleaving of two beams of microbunches 1501, 1502 into a single beam having twice the frequency of the original beams 1501, 1502.

The beams emerge in the higher frequency RF structure downstream operating at 25 MHz (e.g., a second RFQ) with twice as many micropulses in each Slug, and half the number of parallel beams. The beams continue into the next structure and upon emergence are interleaved with an adjacent beam once again thus again doubling the number of micropulses and halving the number of beams that need to enter the next linac section. After each subsequent acceleration section the beams continue to have their micropulses doubled by interleaving until four beams remain at the end of the 200 MHz accelerator.

With interleaving repeated at each of the frequency steps, e.g. five, the current of each Slug multiplies by a factor of thirty-two. Fig. 15 provides a diagram 1300 illustrating the process of "funneling" - interleaving at frequency doublings. The timing structure for the RF fields in any given section of the linear accelerator are illustrated in Figure 15. The beam forming process is repeated a second time, producing two sequential Slug Trains. The two Slug Trains are separated later, to deliver one beam to each side of the destination reaction Chamber. For illustration, the result of interleaving is four parallel beams in the last section of the linac used by the slower group of Slugs, e.g. the substantially heavier ions used for the Fast Ignition Pulse.

The final portion of this linac section, called the Telescoper, has a pulsed switch magnet for each of the Slugs. The switches are located where the Slug in questionreaches the specified Common Beam Rigidity. Once that magnetic stiffness is reached, they are removed from the accelerator and fed into a Telescoping beamline, i.e., a magnetic beamline in which Slugs of the same stiffness but different speed are able to catch up to each other. The following (faster) Slugs for the Fast Ignition Pulse are fed into an accelerator with twice the frequency (e.g., 400MHz), but are not interleaved, and continue as four parallel beams of Slugs with RF-synchronized microbunch structures. The final portion of this linac section is, again, a Telescoper, integrating a pulsed switch magnet (between linac tanks) for each of the at the point where the Slug in question reaches the specified Common Beam Rigidity, which is identical with Rigidity of the ions in the group of slower Slugs.

Once all slugs are out of the telescoper, the four beam lines are merged to form one beam line with four times The current. The radiofrequency microstructure of the merged beam is the same as for each of the pre-merged parallel beams, as is the SubSlug structure.

Next, alternating SubSlugs from the merged beam line are immediately switched into the start of a new beamline, which is bent into 360 degree loop, to arrive in RF synchronism with the next SubSlug. This Loop Stacking will use a series of two loops (sending four parallel beams downstream), or one (sending two parallel beams downstream). The result of Loop Stacking is to position multiple SubSlugs at precisely equal distances from the fusion target.

Downstream, the Slugs are the length of a SubSlug, and the SubSlug timing feature goes away. The number of parallel beams in parallel beamlines at this point (i.e., either two or four, in this illustration) continues to the Chamber and the fusion target, with one of the two SlugTrains magnetically switched into one or the other of two sets of the beamlines for two-sided target heating.

All operations beyond the Telescoper may take into account the fact that the Slugs are moving at different velocities relative to each other and thus are getting progressively closer together at the same time that the RF frequency of the Snugger is bringing the micropulse structure to higher and higher frequency. The Snug Stopper freezes the microstructure, but the Slugs continue to drift together until, at the target, they all arrive on their pre-programed schedule.

Specified RF waveforms are generated at low power by a Master and Subordinate Arbitrary Waveform generators. The Driver's RF Master Clock communicates with the Chamber controls, in particular those concerned with the dynamic injection of fuel charges in their protective sabots.

The total duration of beam emitted by the linear accelerator for each ignition pulse is, for example 200$\mu$sec. Blank spaces in the overall beam profile are needed for a number of purposes, including:

- Gating the outputs of the ion sources for different Isotopes;
- Subdividing Isotopic Slugs into a number (e.g., four) of SubSlugs;
- Switching alternating SubSlugs into parallel beamlines in Loop Stacking;
- Raising or lowering RF accelerating gradients between passage of one Isotopic Slug and the next, to accelerate isotopes with different masses to equal speeds at each point of the path through the Fixed Beta-Profile linac and Telescoper;
- Raising or lowering the RF frequency in the beam manipulation processes of Snugging, Snug Stopping, and Slicking;
- Switching Slugs after the HDL from individual beamlines into common beamlines;
- Bifurcating beams for RF bunch maintenance in the HDL and at the Slicker.

Certain processes can exploit the same time gap as certain others. Thus, the required sum the time gaps may be less than the sum of the times of the gaps for processes individually. Prominent features of the design are specifically for the purpose of removing these gaps, including Telescoping of Multiple Ion Species and by the action of the Helical Delay Line.

NEW AND MODIFIED FEATURES AND PROCESSES FOR IGNITOR PULSE GENERATION

The following list is in the approximate order in which the processes occur during generation of an Ignitor Pulse:

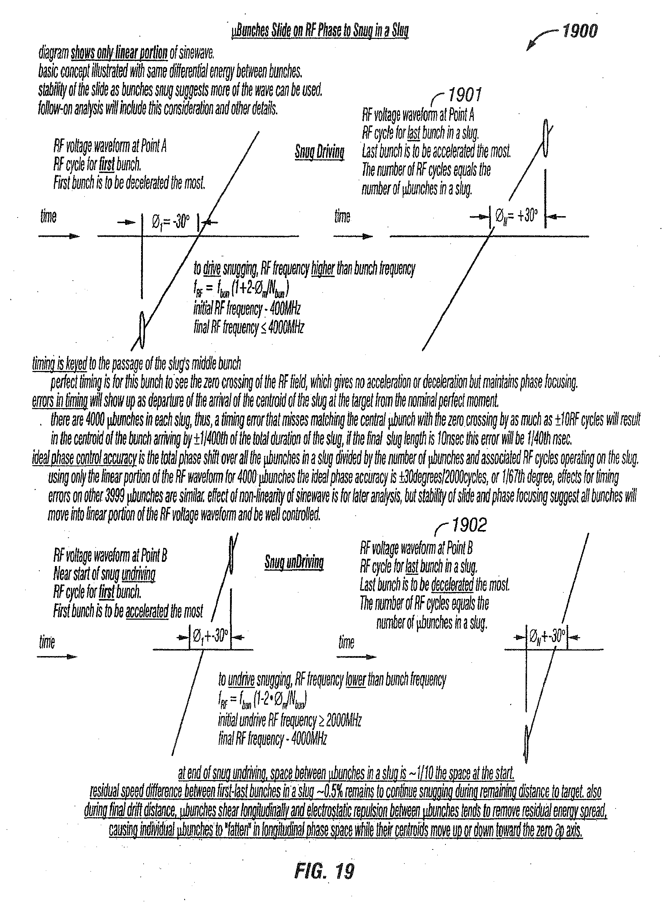

1. Maintain individuality of the ion microbunches as produced and emitted by the linear accelerator throughout the system to the fusion fuel target;
2. Emit multiple, parallel high energy beams from the linac'
3. Merge multiple beams from linac into one by 2x2 stacking in transverse phase space: 4x Slug average current (and concomitant 4x micropulse peak current to transport);
4. Stack Slugs two at a time into, for example, four parallel beamlines by recirculating Slugs in sequential loops of appropriate length (second loop generally twice as long as preceding loop: 4x peak and Slug currents. Every-other Slug switched into Loop by moderately fast switch magnet. First Loop has single beamline. Second Loop has two parallel beamlines. The configuration of four parallel beamlines is carried throughout following processes and merged onto the pellet.;
5. Move microbunches within each Slug closer together (Snug). The process is illustrated in Fig. 19. Microbunches within a Slug are differentially accelerated and decelerated, progressing from maximum deceleration of the first microbunch in a Slug to maximum acceleration of the last microbunch in a Slug;
6. Differential microbunch acceleration is achieved by offsetting the RF frequency of the Snugger linear accelerator sections. From the first microbunch experiencing the most deceleration, the "stable" phase angle of successive micropulses progressively shifted higher on the RF waveform, until the last microbunch in a Slug is differentially accelerated the most;

7. The absolute frequency offset is calculated by dividing the difference of the stable (but decreasing) phase angle from front to back of the Slug, e.g., 60 degrees total, by the number of micropulses in a Slug, e.g., one thousand.;

8. The RF phase control requirement is set by the fractional frequency difference, for example, one part in ten thousand;

9. RF frequency of each Snugger tank is programmed to step progressively to higher frequency, synchronized to the different speeds of the multiple ion species. Practical limits on the bandwidth of the linac structures and their RF power sources determine the limits on the different Isotopic Species that can be treated by one Snugger beamline;

10. Where another unique group of Isotopic Species is used with a large difference in mass and speed, e.g., to achieve valuable effects in the fusion fuel target such as Fast Ignition, separate, parallel Snuggers are required. Each separate Snugger is able to treat Isotopic Species with mass differences ranging over approximately 10% (i.e., $\pm 5\%$);

11. Snugging causes the microbunches in a Slug to pass successive points along the beamline at progressively higher frequency, corresponding to the decreasing distance between microbunches. To maintain efficient use of the applied RF voltage, the RF frequency is correspondingly increased in a specified number of discrete locations in the Snugger, in successive blocks of Snugger linac tanks. Higher frequency RF structures handle higher electric accelerating fields, substantially shortening physical length;

12. Microbunch identity continues to be maintained by Phase Focusing in the RF Snugger linac structure. Between Snugger structures, and in other portions of the beamlines not dominated by RF acceleration, the microbunch structure is maintained by periodic Bunch Reflectors (Double Rotators). In standard practice, the typical use of single Rotation minimizes the momentum spread while maximizing the time dimension of a microbunch. Double Rotation (Reflection of the longitudinal phase space ellipse in the time axis) helps to maintain the microbunch structure over long transport distances by resetting the orientation of the ellipse such that a longer distance is achieved before the next Rotation / Reflection shearing of the ellipse;

13. Snugging limit is reached when dimensions of RF structure are judged as small as acceptable to pass the very power beam with a total beam loss by wall impingement of, for example, 1% over tens of kilometers of beam tube;

14. Slug average current increases, e.g.10x, for Snugging that is driven by frequencies starting at 400Mz and stopped by frequencies ending at 4GHz. Width of phase on RF Snugger wave is substantially unchanged, and microbunch peak current increases by the Snugging factor, i.e., 10x for this example;

15. Snug Stopping returns the microbunches to the same reference energy, as will be required regarding chomatic aberration at the focus. the: enables timing to accommodate different distances to multiple chambers;

16. Helical Delay Line (HDL) removes specified, high fractions of time gaps between Slugs (e.g., Slug centers move from 2.5$\mu$sec apart to 300 nsec apart0;

17. Helical Delay Line function has high "bandwidth" for wide range of gap removal, as required by Multiple Chambers;

18. Microbunch identity continues to be maintained by Phase Focusing in the HDL by periodic Bunch Reflectors (Double Rotators). For large differences of the ion (and microbunch) velocity, in particular where velocities are used for the Compression Pulse and the Fast Ignition Pulse that are widely different, each of the parallel beamlines in the HDL is bifurcated before entrance to each Bunch Reflector and recombined into a common beamline just after exiting the Reflector;

19. Slicking reapplies differential microbunch speed at a distance upstream from each fusion chamber. The distance from the Slicker to the Chamber and Target is approximately the same for each of the Multiple Chambers; and

20. The Beam Wobbler used for fusion targets requiring heating of a cylindrical annulus is located upstream from the final focus lenses. If the Driver drives fusion targets that do not require heating a cylindrical annulus of any length (depth of beam penetration), the Wobbler can be deactivated or omitted from the design altogether.

## Common Use of Beam Handling Elements

Generation of the Fast Ignition Pulse mostly uses the same Driver hardware as the Compression Pulse. Separate hardware is used for processes that are affected by a large difference in ion (and microbunch) velocity, which can provide important advantages for overall ignition efficiency:

- The Source Hotels, HVDC Preaccelerators, LEBTs, and Marquee Linacs include individual sources and bore tubes for the individual Fast Ignition isotopes as they do for the individual Compression Pulse isotopes;
- The Common Beta Profile section of the accelerator linac is used by all Isotopes;
- The Telescoper section of the linac will be common to all Isotopes, with slower isotopes being progressively switched out. This results in the number of Isotopes being accelerated decreasing by one for each successive section of the Telescoper;

- One Common Rigidity beamline into which beams of different isotopes are switched after accelerating to Common Rigidity is common;
- Beams from the Common Rigidity beamline are switched into separate Snuggers and Snug Stoppers where the difference of the ion (and microbunch) velocities is too large for a practical bandwidth of the RF linac structures and RF power sources;
- A common Helical Delay Line is used for all Isotopes, but large differences of speed require periodic beamline bifurcations for periodic Bunch Rotators/ Reflectors;
- Individual Slugs exit the HDL into short transition sections of individual beamlines, which lead to Fast Switch Magnets for realigning the Slugs in a common beamline, with specified new, shorter spaces between Slugs;
- All Isotopic Species use one set of Beamlines from the HDL to the individual Slicker at each of the Multiple Chambers;
- Separate Slickers are used where the difference of the ion (and microbunch) velocities is too large to be accommodated by a practical bandwidth of the RF linac structures and RF power sources. Where separate Slickers are used, the beamlines are bifurcated by fast switch magnets just upstream and rejoined just downstream of the Slickers;
- Beam Wobblers (if used) are common to all Isotopes. Whereas a Wobbler is used for a Compression Pulse, and whereas the Fast Ignition Pulse is aimed at the center of the fuel when it reaches the compressed state, the distance from the Wobbler to the fusion target is specified to accommodate a practical risetime of the Wobbler between the Fast Ignition pulse and the Compression Pulse; and
- Final Focusing Lenses are common to all Isotopes.

## Description and Operation of New Current Multiplication Processes

### Beam Parameters at Linac Output

The parameters that characterize acceleration in the linac follow the proven prior art, established by operating machines and designs using standard, industrial design tools. Linac output current is increased by using multiple, parallel, RF-synchronized output beams, e.g., four. Linac output further is increased at the front end by using established ion source and high DC voltage technology, e.g., Argonne National Laboratory 1977-1980.

The new arrangement of current multiplying processes makes strong use of accelerating multiple isotopes. The effect of using Multiple Isotopes, alternatively known as "Telescoping Beams", can be appreciated by adding another multiplicative factor to the previously existing line-up of processes. However, ramifications of the present approach to exploiting beam telescoping lead to distinctly different types of current multiplier processes. Occurring in the driver system "downstream" (after) the linear accelerator, and under the constraints of the 6-D phase space as previously discussed, the different beam restructuring, beam compaction / intensification / overall current-amplifcation also favorably affect the ultimate focusing on the fusion target.

### Figs. 10 and 11 illustrate the major functional blocks of a HIF Driver. Improvements in the areas of each of the functional blocks include: New Features of Ion Sources and Low Velocity Acceleration:

The primary new mechanisms are employed for the compaction of the beam after it leaves the linac. The new design also involves changes in features of the linac, which complement the improved beam reconfiguration design. Most novel are the features related to the use of a larger number of different Isotopic Species than previous HIF driver designs.

The Ion Source Hotel integrates many isotopic sources into a compact cluster of one for each Species, including both the Species for the Compression Pulse and for the Fast Ignition Pulse (if employed). The output pulses from individual isotopic sources are synchronized via a gate voltage in a programmed series to produce the basic building block of Slug beamlets in the specified sequence. The compact array of beams enables the HVDC column to continue the specified array of apertures.

HVDC source technology in excess of 1MeV, e.g., 1.5MeV demonstrated by prior art, viz., Argonne National Laboratory 1976-80. In conventional design practice, the peak current limit for transport in a strong focusing magnetic beamline increases with the five-thirds power of the momentum. Using commercial ion source technology and commercial HVDC sources, this feature contributes an important factor to increasing the peak current of each beam at the output of the linear accelerator. The compact array of beams enables the following Marquee RF Linac to continue the specified array of apertures.

Marquee RF Linac: The Marquee Linac facilitates acceleration of the space-charge dominated, low velocity beam by not significantly bending the beams at the lowest velocities where magnetic focusing fields are less effective. The Marquee linac structure has an array of parallel bore tubes matching the bore hole pattern of the Source Hotel and the accelerating column in the HVDC preaccelerator. Each tube in the Marquee carries only one Isotopic Species of beam. The pulsed beams of specified Isotopic Species (also referred to as Sluggetts) occur in the array of bore tubes in the programmed temporal sequence imprinted at the ion sources.

Marquee Collapser (Aligner): After exiting the Marquee, the beams in temporal sequence exiting from parallel beam tubes in the Marquee are fed into a single beam tube, i.e., one tube per Marquee by a series of moderately fast switch magnets. The risetime of these magnetic switches is one of the chief determinants of the gap between Slugs. After the Collapser (Aligner), all of the accelerated isotopes in the specified order of Slugs a transported in a common line.

**New Features After the Fixed Beta-Profile Linac**

Telescoper: The multiplicity of isotopes is distinctively greater than the prior art. The internally consistent, end-to-end design is predicated on using many isotopes, e.g. ten. When an Isotope reaches the Common Rigidity, that Slug is switched into a Telescoping Beamline, i.e., a beamline in which Slugs get closer together as they move forward. Heavier isotopes are switched out of the Telescoper first. The isotopic masses of the multiple isotopes range approximately $\pm 5\%$, subject to the bandwidth limitations of downstream RF beam handling processes.

Timing features of the beam pulse structure are provided by generating a specified RF waveform covering each Ignitor Pulse, according to the overall distance from the ion sources to the fusion fuel targets in Multiple Chambers at different distances from the ion source, arriving according to a specified sequence that provides the desired Ignitor Pulse power profile. Gated emission of the various Isotopes from their respective is coordinated with the master RF waveform.

**New Features After the Linac**

For illustration, at the linac output, each of four active beam tubes emits 1.25A.

Merging: The multiple beams exiting the linac are merged in transverse phase space, amplifying the current in a single beam by the number of linac outlet beams, e.g., four. Merging may be effected in a two-step process, which may be illustrated by using the example of four linac beams: (1)Merge beams two at a time into two downstream beams in one plane of transverse phase space, and (2) merge the resulting two beams into one using the other plane of transverse phase space.

The Merge (plus dilution factor) is the last process that necessarily increases the transverse emittance of the beam after its exit from the linear accelerator. Beams may be merged with economical use of phase, at a beam focus.

This introduces substantial improvement in the tightness of focusing of the beams on fusion targets compared to the prior art. Although maximum target heating is the first priority, reduced beam emittance alternatively may be exploited to give relief to the parameters of the final magnetic lens system.

Loop Stacking: The purpose of Loop Stacking is to balance the burden of overall current multiplication between processes that operate in the transverse phase space and those that operate in the longitudinal phase space. Loop Stacking sorts successive sections of beam into parallel beamlines, in synchronism at the level of the individual microbunches in the beam sections in parallel beamlines, as needed for microbunch structure to be maintained in common RF structures with multiple bores for the parallel beams.

The following illustrates a case of Loop Stacking. The structure of the beam emitted by the accelerator is specified with each Slug subdivided into four SubSlugs, separated by time gaps adequate suited for the risetime of switch magnets. The first SubSlug is switched into a beam line that completes a circle to return the SubSlug to the vicinity of the switch and into parallelism with the original beamline. This first set of two parallel beams are switched into a second loop with twice the circumference of the first, which joins in parallel with the beamlines containing the the third and fourth SubSlugs.

The total instantaneous current of the multiple propagating Slugs has been increased, and the space between Slugs has been increased. The enlarged space will be removed by the Helical Delay Line (HDL). Beam amplification has been accomplished by using the transverse phase space. The longitudinal phase space is unchanged in principle, and growth by dilution will be determined by the precision of the RF fields that maintain the microbunch structure.

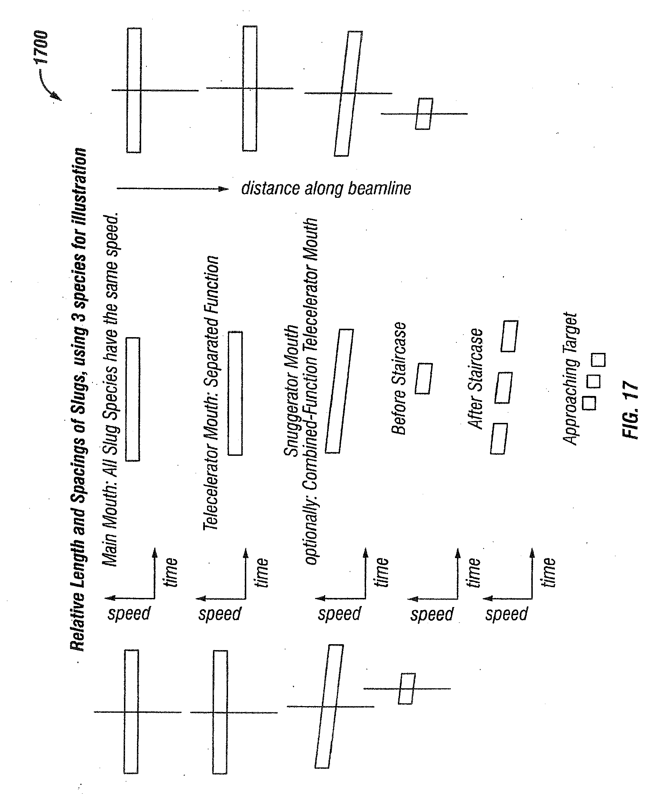

The multiple beam configuration established by Loop Stacking continues to the fusion fuel target, with Slug Trains routed to arrive at the target from a specified number of directions, e.g., two. The choice for the location of the stacking loops from a number of possible positions along the beamline depends on the technology trade-offs associated with propagating a single beam (viz. after Merging the multiple beams from the linac) or as multiple parallel beams (viz. as created by Loop Stacking). This consideration is relevant to the beam configuration input to the Snugger and the Helical Delay Line. Fig. 17 shows a diagram 1700 of the relative length and spacings of slugs, using three species for illustration.

**Snugging:**

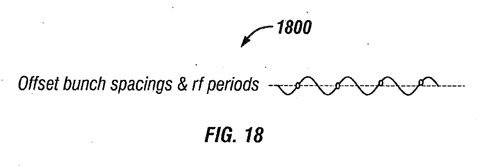

As shown in the diagram of Fig. 18, Snugging imparts a differential velocity between successive microbunches. Snugging is accomplished by offsetting the RF frequency of the Snugger from the bunch frequency (the rate at which microbunches pass a point on their path) such that the first bunch is decelerated most and the last bunch is accelerated the most.

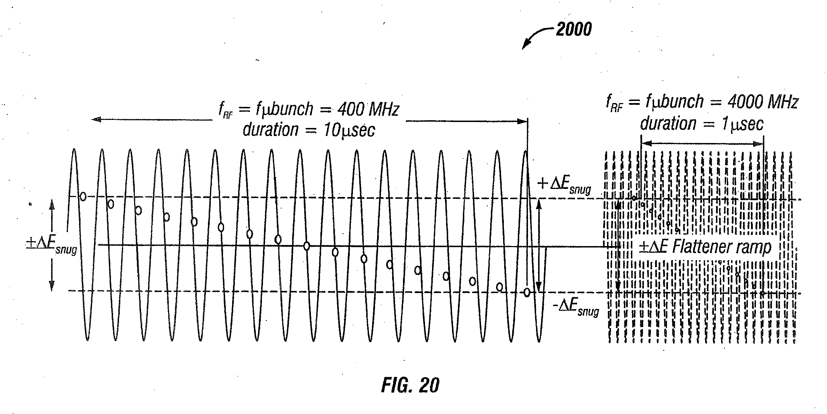

Fig. 19 provides a detailed diagram 1900 depicting the processes of snugging 1901 and snug-stopping 1902. Fig. 20 provides an alternate diagram 2000 illustrating differential acceleration by offset RF frequency.

The microbunches inside each Slug are virtually identical at the input to the Snugger, which imparts a progressive speed differential amounting to, for example, $\pm$5% to $\pm$10%, to the first and last microbunches relative to the unchanged speed of the center bunch. When Snugging has reached practical technological limits, the Snugging process is reversed and the speed differential is removed in the Snug Stopper.

As shown in Fig. 20, the amount of frequency offset is the quotient of (1) the maximum phase shift specified to be experienced between the first and last microbunches and (2) the duration of the Slug. For illustration, taking the Slug to be 1 microsecond long and the total phase shift to be 60 degrees (1/6 of an RF cycle), the frequency shift will be 1/6 MHz. Taking the RF frequency of this Snugger section to be 1GHz (e.g., an accelerating cell length of 12 cm for a v=0.4c ion), the phase control accuracy requirement is about 0.016% or better.

Both differential acceleration and differential deceleration result from the Snugger's RF field being offset slightly from the bunch frequency. To add the differential velocity, the Snugger RF frequency is higher than the bunch frequency at a given point on the beam path. To remove the differential velocity, the RF frequency is a specific amount less than the bunch frequency at that point in the beam path.

The Snug Stopper is shorter than the Snugger because its RF frequency is higher, e.g. 10x, and the higher RF frequency structures support an accelerating voltage gradient that is higher as approximately defined by the Kilpatrick limit. For the example of 10x Snugging with equal increase in RF frequency, the gradient of the Snug Stopper is about three-times higher than in the first section of the Snugger.

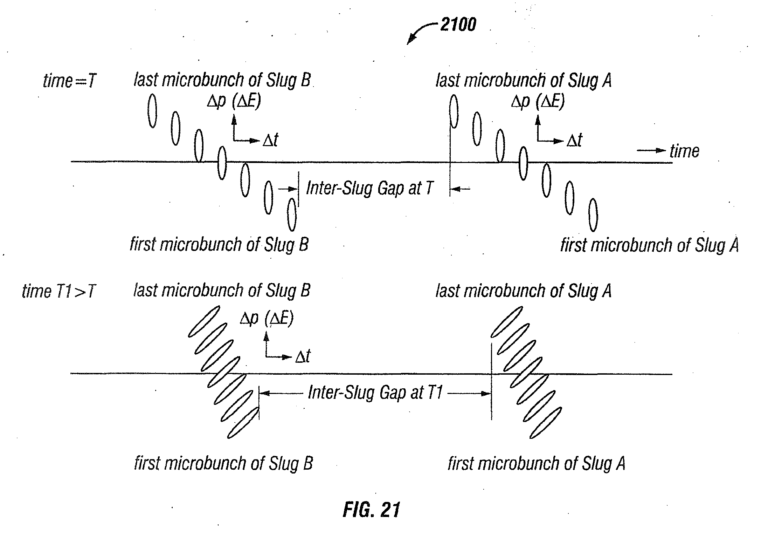

As shown in the diagram 2100 of Fig. 21, Slugs are caused to contract axially inside the Snugger, e.g., by 10x. Entering the Snugger, the distance from the center of one Slug to the center of the adjacent Slug is the length of a Slug plus an interslug space originally set by the Master Timing. For example, Slugs that are 2.5$\mu$sec long at the Snugger entrance will be 0.25$\mu$sec long at the Snugger exit.

The empty space that grows between the slugs subsequently will be removed via the Helical Delay Line, subject to the risetime of the switching magnet and downstream timing requirements for ignition in Multiple Chambers.

No net power is added to a Slug by Snugging. Excitation of the accelerator structure is the primary power requirement. However, beam energy flows to the RF fields during deceleration, and from the RF fields to the beam during acceleration. A modest part of the shifting energy may be recycled by RF system design refinements, but the energy consumed by the Snugger in excess of the excitation "copper loss" will be a small fraction, e.g. 1-5%, of the energy consumed by the primary linear accelerator.

The efficiency of using the provided RF accelerating field strength gains when ions experience the amplitude near the peak of the sine wave. In opposition to this argument for using a large excursion of phase angles is the desirability of a linear progression of the differential acceleration of successive microbunches. For illustration, nearly linear progressive increased acceleration/deceleration would restrict the phase width to $\pm$30 degrees. A larger phase shift will decrease the peak RF voltage and/or the length of the Snugger accelerator. The Snugging uses the rising side of the sine wave, which provides the phase stability effect.

Cradling is a feature incorporated into the control of the RF waveforms to increase the usable phase width in Snuggers and Slickers. The Cradling effect shifts the RF sine waveform to compensate for the curvature of the sine wave as the differential speeds increase in the microbunches as the Slug passes through a Snugger, or to a much lesser extent in the Slicker. Control of the waveform for Cradling is integrated with parameters from detailed design and modeling. Cradling increases the efficiency of the Snugger and Slicker accelerators, primarily to reduce cost, although the power used by these components is a small fraction of the total required to run the Driver.

When the Snugging action reaches a technical limit or otherwise desirable stopping point, the Snug Stopper removes the differential energy spread by reversing the differential acceleration process. A primary technical consideration is the existence of high power RF sources at the frequencies of the Stopper. Another primary design restriction is the diameter of the bore tube, which decreases with increasing RF frequency. For illustration, starting the Snug with a 400MHz RF and stopping the Snug with 4GHz RF will shorten the Slug by a factor of ten, and transmission through a bore diameter on the order of 2cm.

## SNUGGER ACCELERATOR AND RF POWER STRUCTURES, FREQUENCIES, AND BANDWIDTHS

Microbunches enter the Snugger at the bunch frequency emitted by the linac, as defined by the linac's RF output or penultimate frequency. The highest bunch and RF frequency in the Snug Stopper will be approximately 4GHz.

Timing and waveform control in the Snugger provides the synchronized sequence of RF frequencies that are are progressively increased in blocks of accelerator sections, and increase in each accelerator section to accommodate successive Slugs with progressively higher nominal speeds. These required bandwidths correlate with the range of speeds of the Multiple Isotopic Species.

One design-optimization trade-off concerns the number of different RF frequencies used. For any given frequency,-individual microbunches move toward the zero crossing point of the RF waveform, and experience a smaller fraction of the peak accelerating (or decelerating) voltage gradient. By increasing the RF frequency of succeeding Snugger sections, the voltage gradient experienced by the first and last microbunches can be periodically reset to the original phase angle. Thus, the utility of many frequencies is to achieve more efficient use of a length of Snugger and the RF power that drives it.

The state of the art of accelerator structure and RF power design and manufacturing makes it practical and economical to use a substantial number of discrete frequencies. However, the multiplicity of frequency changes will experience diminishing returns, and the number of frequency changes used is a question appropriate for detailed design.

Control of the waveform for Cradling is integrated with parameters from detailed design and modeling.

SNUG STOPPING

Snug Stopping removes the velocity differential when the process has reached the practical limit set by the diameter of the bore-tube that the beam must pass through. Beam scraping is to be avoided, and simulations of particle beams famously cannot model beam "halo", however it is noted that the high quality beams will be focused to millimeter and submillimeter diameters downstream. The workhorse S-band structure of SLAC's 2-mile linac is an appropriate illustration. The structure's bore is about 2 centimeters, which seems ample for clean passage of the heavy ion beam.

Microbunches progressively compress axially to fit similarly on RF waves with decreasing RF periods. The momentum spread within microbunches increases proportionally. However, after the microbunches are released from phase focusing after the Slicker, they shear in longitudinal phase space, the phase space ellipses stretch in the time dimension, and their instantaneous momentum spread shrinks. This behavior is exploited by the Slicker, at a later point on the beam path.

HELICAL DELAY LINE (HDL)

LOCATION OF HELICAL DELAY LINE (HDL)

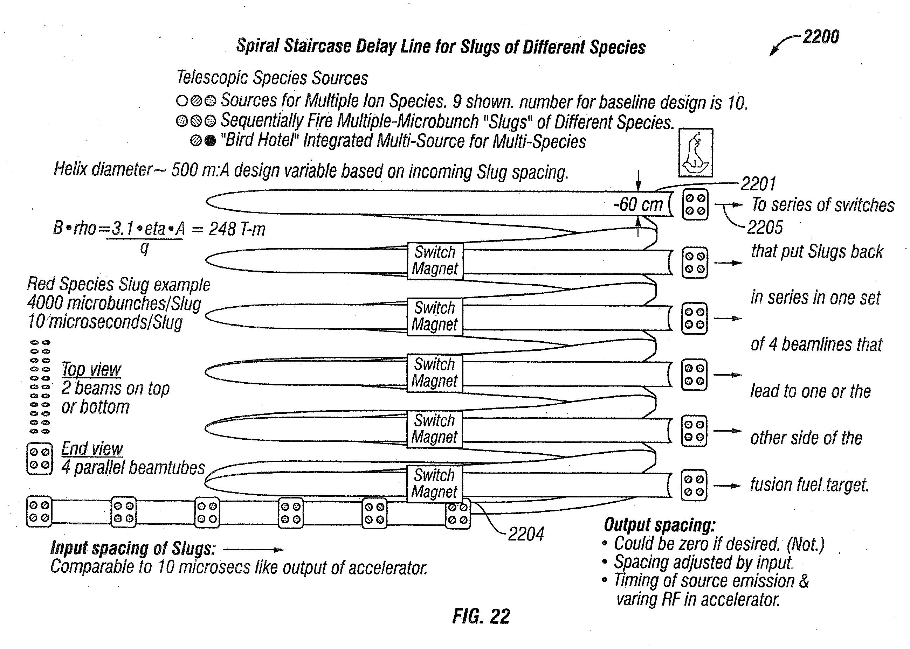

Shown in the diagram 2200 of Fig. 22, the effect of the Helical Delay Line 2201 is to chop out much of distance between centers of successive Slugs. The remaining gap between the trailing end of one Slug and the leading end of the next is variable, to accommodate different remaining distances to Multiple Chambers. Snugging transfers unwanted space from inside individual Slugs to the gap between Slugs.

The length of each coil 2203 of the HDL is of the order of the distance between the centers of successive Slugs. However, timing of the magnets 2204 for switching individual Slugs out of the HDL accommodates any Slug spacing greater than the time of the orbit around the circumference of one coil of the HDL. The first Slug in a Slug Train traverses the full length of the Helical Delay Line before its exit point. Successive Slugs of progressively faster ions exit the HDL sequentially, after traversing progressively fewer turns of the HDL. The exits 2205 for the various Slugs are approximately at the same azimuthal point on the HDL 2201.

Large fractions of the inter-Slug gaps, including the enlargement of the gaps due to Snugging, are removed when the Slugs exiting the HDL are switched back into the common beamlines that continue to the Chambers.

SLUG'S EXIT DELAY LINE

The microbunch spacing is static from the Snug Stopper downstream to the Slicker associated with each of the Multiple Chambers, to accommodate:

- Different lengths of the paths of different Slugs through the HDL and
- Different lengths from the HDL to the Multiple Chambers.

Slugs could be Stacked before or after HDL. Stacking before reduces the number of parallel beam tubes with magnet bores, etc.

Locating the Snug Stopper upstream from the HDL 2201 allows the HDL to transport beam with the small momentum spread inside individual microbunches.

MICROBUNCH MAINTENANCE

Maintaining the microbunch structure and preserving the 6-dimensional phase space of individual bunches is a hallmark feature of the new Driver design.

**Beam Drift and Conditioning for Multiple Chambers:** HIF fusion power is most economical if a single heavy ion driver system ignites fusion pulses in a repeating sequence in multiple fusion chambers. In the most general layouts of multi-chamber fusion power parks, the distance from the accelerator varies from chamber to chamber.

Telescoping and Snugging are the key dynamic beam generation processes. Telescoping is grossly programmed to culminate at Multiple Chambers via appropriate differences in the timing of emission from Multiple Isotopic ion sources. Precise timing is provided by the RF waveform control. Absolute timing of the arrival of a Slug at the target thus is extended to a fraction of the RF period of the lowest frequency RF accelerator, for example, control to 1% of the 100nsec period of a 10MHz Marquee Linac would give 1 nsec control of the Ignitor Pulse Profile.

The Snug Stopper permits microbunches to maintain relative positions as a Slug traverses the distance to one of the Chambers. At a specific location on the beamline before the target Chamber, the differential motion of the microbunches is restarted by the Slick process, which is similar to the RF process for Snugging.

**Slicker** Called Slicking, the most distinguishing difference with Snugging is that after the Slicker imparts the differential speeds, the microbunches are released from phase focusing and the Slick process is not terminated.

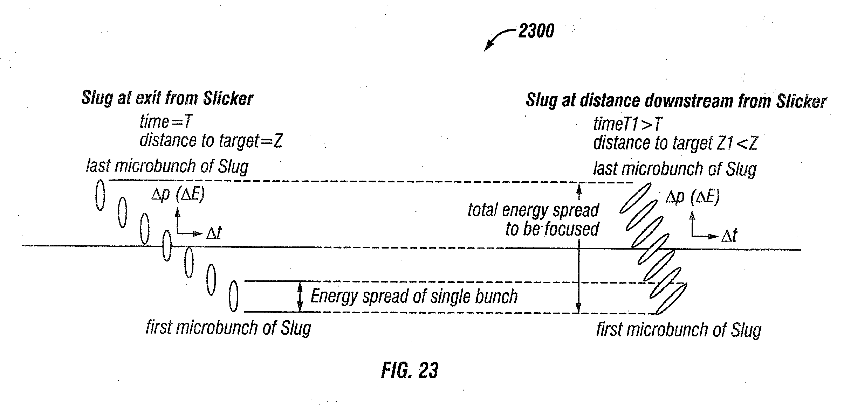

At specified distances upstream from each of the Multiple Chambers, Slicking imparts specified, smaller velocity differentials back into microbunches of the various Slugs. Slicking is similar to starting the Snugging process but differs in that, after the Slicker imparts the speed differentials, the microbunches are released from the axial length constraint of phase focusing and the Slicking action is not stopped. Figure 23 illustrates the Slicking process. As the Slicked beam drifts toward the target chamber, the centers of the microbunches 2301 get closer together and individual microbunches lengthen as a result of the velocity spread intrinsic in the longitudinal phase space.

Conserving the longitudinal phase space area, the Microbunches stretch in time and narrow in instantaneous momentum spread as the various Slugs proceed toward Telescoping into the desired beam power profile at the fusion target.

The differential speeds imparted to the microbunches by the Slicker are initially specified so that all microbunches arrive at the target simultaneously, or with a desired spacing. Any effects of space charge to change the inter-bunch speed differential may partly be overcome by corresponding increase in the accelerating voltage of the Slicker. Space charge effects and errors in the Slicker's RF waveform will be responsible for any growth of the longitudinal emittance.

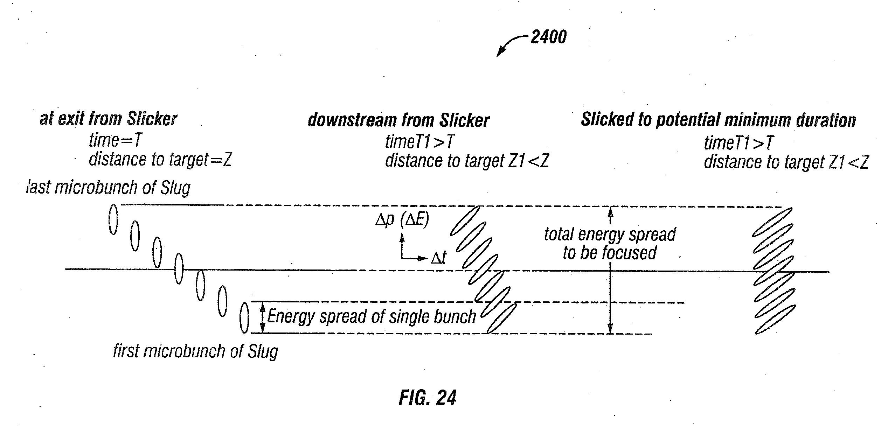

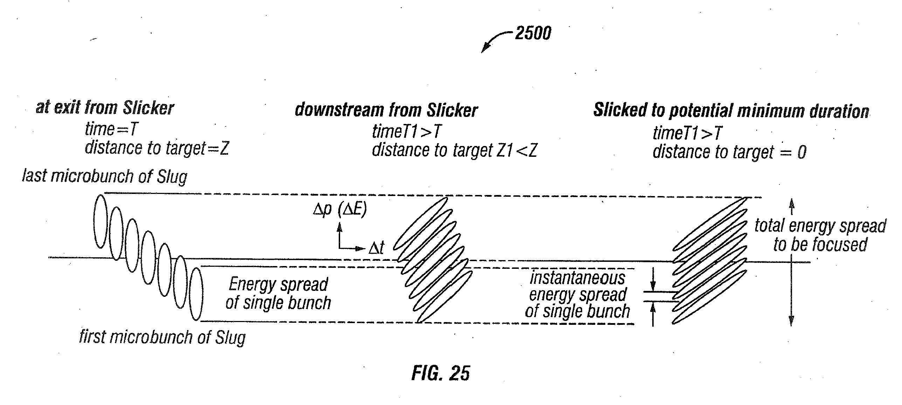

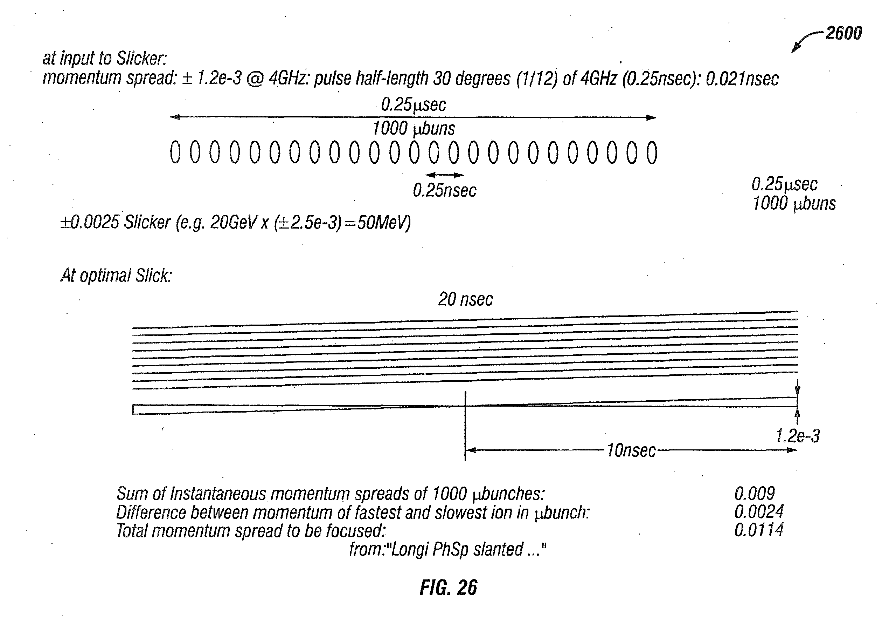

The effective minimum, total momentum spread is illustrated in Figure 24 for the general case. The potential minimum Slug length is seen by inspection to be the sum of the instantaneous momentum spreads of the stack of Slicked microbunches plus the difference of momentum between the front and the back of one microbunch. This effective minimum momentum spread (illustrated in Figure 25) is well below the requirements for acceptable chromatic aberration at the target. Fig. 26 provides a diagram 2600 illustrating an optimal slicker effect.

Ignitor Pulses are switched from the Manifold Beam Line into beamlines that terminate in the individual Chambers. Each of these terminal sections of beamline requires an individual Slicker. The Slicker imparts much smaller differential speeds, and individual Slickers (nominally the same for all chambers) for each Chamber is a small cost item.

**Table 1. Illustration of Slick as scaled from prior art**

| HDIIF linac 10GeV Bi+ | HIF linac 20GeV Xe+ | HIF Snug 20GeV Xe+ | HIF Slick 20GeV Xe+ | |
|---|---|---|---|---|
| 200MHz | 400MHz | 4000MHz | @4000MHz | @target |
| Snsec | 2.5nsec | 0.25nsec | 0.25nsec | 20nsec |
| 1.2e-4 | 1.2e-4 | 1.2e-3 | 1.2e-3 | 1.2e-3 |
| 1.5nsec | .75nsec | .075nsec | n/a | 9e-6 |
| $q\_\mu$bunch | $q\_\mu$bunch | $q\_\mu$bunch | n/a | 1000 |
| _peak | l_peak | l_peak | n/a | 9e-3 |
| | | | .075nsec | 10nsec |
| | | | $q\_\mu$bunch | |
| | | | l_peak | Snugmore |

WOBBLER

The purpose of the RF Wobbler concept is to swirl the beam spot rapidly around an annular target, for purposes of smooth energy deposition density in the target. The RF Wobbler is located upstream of the final focusing lenses, where the beam diameter is small to correspond with the Wobber aperture. Where Isotopic Species that have a large percentage speed difference are used, particularly for the sequential processes of Compression and Fast Ignition, the block of Slugs for Compression must experience the Wobbler effect (for the spot to illuminate an annular shape), while the Wobbler effect must be off when the block of Slugs for Fast Ignition pass through, as the FI pulse is aimed at the center of the target.

Using slower ions for the FI Pulse, compared to the speed of the Compression Pulse ions, provides a space in time between the two pulses that can be used to turn the Wobbler on or off. For Cylindrical Targets in particular, the required FI Peak Power decreases approximately linearly with the ion range. The range of energy deposition shortens with higher Z and lower kinetic energy. The sensitivity of design optimization to the choice of ions is not great, and choices of the relative mass of the FI and Compression ions are driven by the practical consideration of immediate availability of the hardware, i.e., known and readily made technology.

For illustration, volumetric plasma xenon sources is commercial technology (ANL used this technology in key current and brightness demonstrations 1976-80.) Using xenon at Z=53 for the Compression Pulse, a number of heavier ions are good candidates. If lead is used for the FI ions, and 20GeV is the nominal energy of the multiple xenon isotopes for the Compression Pulse, the Telescoping Condition requires the energy of the lead isotopes to be in a range near 13GeV. The shortening of the range in the pre-compressed fuel, of this example, is a factor of 6x-7x. The volume of the FI heated mass of pre-compressed fuel may be made to be approximately the minimum (spherical) physical volume, containing the minimum mass to be FI-heated. Quantitatively, the reduced FI Pulse peak power requirement that results from the more optimum depth of the FI-heated zone is a major reason for confidence in the operability of the new Driver design. Integrated optimization of the parameters for the FI and Compression Pulses will achieve significant cost avoidance.

For illustration, the spot size required for the Ignitor Pulse Beams is found from the propagating burn parameter, rho•R, for example 0.5g/cm^2 (a conservative value). For fuel precompressed to 100g/cm^3 (a relatively safe requirement), the radius of the FI-heated spot diameter needs to be at least 50$\mu$m. Larger spots require more peak ignitor beam power and energy. Smaller spots require more compression, and higher beam brightness.

The FI spot requirement is approximately a factor of ten tighter than for the Compression Pulse, as has been shown by reliable simulations. Prior HIF art held the Compression spot to be achievable, but hard to improve on.. The use of the expanded volume in 6-D phase space provided by using a multiplicity of isotopes achieves the desired improvements, and makes the advantages of Fast Ignition safely within reach of the technology.

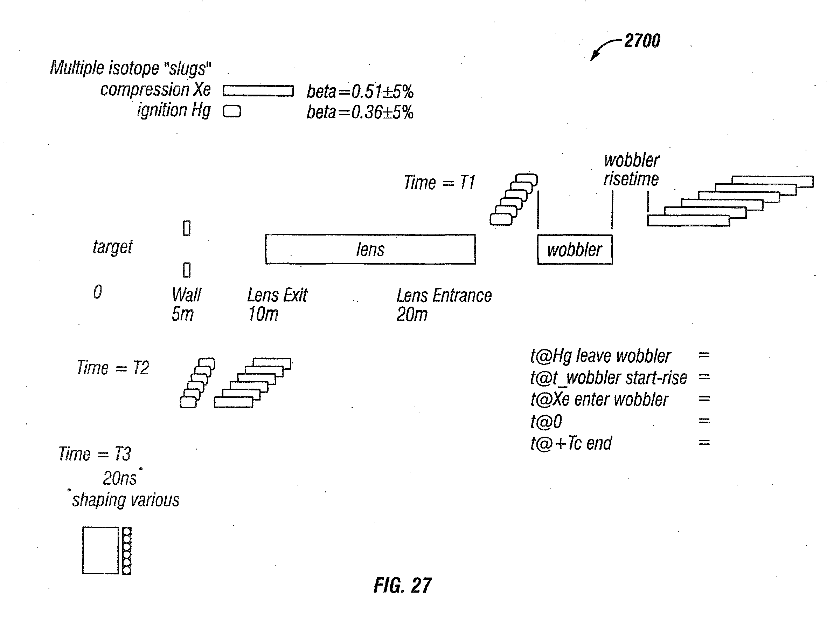

The large difference in speeds between the Compression and Fast Ignition pulses results in a substantial gap between them at the Wobbler, This gap accommodates the Wobbler's risetime 2701, as illustrated in Figure 27.

The risetime 2701 of the RF Wobbler field is of importance regarding separate pulses for Compression and Fast Ignition (FI). Wobbling enables heating an annulus along the axial direction. But the Fast Ignition Pulse needs to be on axis, with two considerations: (1) If the total cross-sectional area of the pre-compressed fuel is larger than the minimum set by the propagating burn parameter, the FI beam may be correspondingly off-axis. (2) If, economically, the power of the FI pulse may be greater than the optimized minimum, the FI pulse may have a larger spot area than the minimum, which may be off-axis and still cover the optimal minimum area of the precompressed fuel.

TARGET IMPROVEMENTS

Compared to the prior art, the new current multiplying processes result in improvement of the beam parameters that define the intensity of target heating and the target response. Higher total beam energy, reduced spot sizes will increase power deposition density and drive targets providing higher energy gain from the fusion reactions. Power deposition density in the target will increase in proportion to the square of the spot diameter. Ignition calculations for fuel target design are planned to exploit these improvements.

Heat deposition uniformity is important for good target performance. Wobbling Telescoping Species smoothes the heat deposition by displacing the instantaneous spots hit by different Species. Due to their different speeds, ions at corresponding points along the different Slugs pass through the Wobbler at some distance upstream from the target (e.g., 30 meters) at different phases of the Wobbler RF field, and ions at different axial positions along a Slug penetrate the heated annulus at different azimuthal points.

During the passage of a Slug through a cylindrical target, a Wobbled beam flies forward with the fixed shape of a helical coil spring. The thickness of the coils is the diameter of the beam spot. During passage of this helical shape through the target, the instantaneous heating at each point in the cylindrical annulus corresponds to the helical shape of the heat source. Heating of the entire annulus is not instantaneously uniform. The time-averaged heating smoothes out over passage of the whole Slug.

With Telescoping, the helical-spring shape of different Slugs in the target is rotated relative to each other, around the common axis. For illustration, if the SlugTrain timing is specified for all Slugs to arrive at the target simultaneously (or with another specified timing, such as to provide a desirable Ignitor Pulse Power Profile), the tips of the different beam helices enter the annulus being heated at different azimuthal locations. The interspersed helical Slugs of the Multiple Isotopes fit into the helical spaces (the helical pitch minus spot diameter), netting a smoothing factor improvement equal to the number of Multiple Isotopes. Different Slugs may be timed for different overlapping arrangements.

The stretching of individual microbunches by the Slicker adds a further smoothing effect. The ions in a given microbunch differ in speed by, e.g. 0.1%. This results in ions that experience the Wobbler fields at the same time arriving at the target at different times. The effect is to flatten the cross section of the instantaneous beam.

ADVANTAGES OF NEW DESIGN

- First single-pass HIF driver to use conventional accelerator technology;
- Makes strong use of multi-species for telescoping beams at fusion target;
- Eliminates storage rings, removing difficult/expensive technical issue;
- Loosend requirement for beam emittance of individual ion sources; and
- reduces aggregate total solid angle of igniter beam input-port apertures.

NEW TECHNICAL FEATURES

- Multiple fusion chambers with one robust accelerator/ignitor (10-100+BPOE pulses);
- sacrificial lithium fuel-charge sabot, neutron moderator, T-breeder, ultra-high Temperature hot working fluid;
- Lithium droplets and fog sprays muffle blast;
- Lithium droplets and fog spray ultra-fast, inter-pulse, fusion chamber vacuum pump;
- pulsed, very high-flow rate lithium pump (10s of tons per second in earliest chamgers)
- Multi-ion species source hotel;
- Micro-bunch snugging system preserves RF temporal structure and timing of ion beam;
- Helical, serial-species delay and re-timing line;
- Fewer beamlines and final focus lenses into fusion chambers; and
- Direct conversion of fusion energy carried by both charbed particles and neutrons.

IMPROVEMENTS CONCERNING THE OVERALL SYSTEM PERFORMANCE AND COST INCLUDE:

- Improved ignitor pulse focusing properties (by exploiting 6-D phase space of multiple species);
- More intense target heating, with classical "Bohr" ion stopping in matter;
- More uniform target heating;
- Ten times more ignitor pulse energy than the National Ignition Facility;
- Fast Ignition (FI) with FI ion species chosen to maximize ignition vigor;
- Timing for Multiple Fusion Power Chambers;
- Driver duty factor in Pulsed RF range; and
- Relieved vacuum requirements.

The new beam processes do not call for multi-turn injection into storage rings. This avoids areas of prior technical concern, significant design effort, and major hardware demonstrations of issues peculiar to storage rings. Removing these concerns shortens the schedule for HIF by removing the need for a time-consuming validation project, necessitating hardware with size, capabilities, and costs similar to those of the storage rings and linac that would be used in a power producing system.

COMPARISON

The new processes may be expressed in terms of a line-up of beam multiplication processes.

$$I_{target} = I_{source} \times N_{isotopes} \times N_{sources} \times N_{snug} \times N_{slick} \times N_{sides}$$

For illustration, treating either Compression or FI pulse. Compression parameters shown:

| $I_{source}$ | xenon with 1.5MV Preaccelerator voltage | = 0.1A |
| $N_{isotopes}$ | number of sources per Source Hotel | = 10 |
| $N_{sources}$ | =number of Source Hotels, Preaccelerators, Marquees | = 32 |
| $N_{snug}$ | =ratio of microbunch spacing pre- and post-Snug | =10 |
| $N_{slick}$ | =length of Slug at Sticker ÷ length of Slugs at target | =12.5 |
| $N_{beams}$ | = number of beams into chamber | = 8 |
| $I_{target}$ | =total beam on target from all directions | = 128,000A |
| Power | = $I_{target}$ x Ion Energy (20GeV) | =6.4PW |

Increasing the Ignitor Pulse current out of the linac results in the linac being on a relatively short on-time per ignition pulse, e.g., 300microseconds. Using ten pulses per second, e.g. to drive ten Multiple Chambers, the RF duty factor is .003, safely inside the range classified as pulsed RF power. The benefits of pulsed RF are higher peak power per source and lower cost per peak power Watt.

The new set of processes for compacting the current produced by the linac minimizes the time the beam dwells in any section of the beam tube, and achieves the important case of a single pass system. Generating the pulse in a minimum of time increases the required RF peak power, but reduces the RF duty factor below the threshold of a fraction of 1%, where peak RF power costs substantially less peak Watt than continuous RF power. For purposes of illustration, Table 2 illustrates this cost consideration based on engineering estimates scaled from state of the art HIF design and costs in the current state of the art of RF power systems:

**Table 2**

| | Linac current total | K.E/ion | Peak RFpower | Ignitor energy | Beam load | Ontime /pulse | Rep rate | Duty factor | Price /W-peak | Average power | Price /W_avg |
|---|---|---|---|---|---|---|---|---|---|---|---|
| *HIF* | 5A | 20GeV | 100GW | 20MJ | 0.9 | 300$\mu$s | 10pps | 0.3% | .015$/W | 300MW | 30$/W |
| *HIDIF* | .4A | 10Gev | 4GW | 4MJ | .6 | 1500 $\mu$s | 50pps | c.w. | N/A | 400MW | 30$/W |

With 5A at 20GeV, the RF feeds 100GW into the beam during the pulse. The power to excite the accelerator is a factor of several less than the beam power, but is not shown. With this caveat, the illustration is instructive for consideration of the economics of HIF power production.

IMPLICATIONS FOR FUSION POWER

The new design features exploit the large increase in the total 6D phase space made available by the use of Multiple Isotopes. The smallest area that can be illuminated at the surface of the target and, therefore, the smallest volume into which the beam energy can be deposited, is governed by the conservation law of physics known as Liouville's Theorem. The essence of Driver design is to work with the 6D phase space defined at the point of origination of the entire number of beam ions, which total about 10 peta-particles, ten million billion, for each Ignitor Pulse.

HIF Driver designs in the prior art are considered stressed, in terms of the capabilities of known technology. Characteristically, the stress is expressible by pressure on the brightness of ion sources to put the required number of ions into a small enough volume of 6D phase space so that the processes that constitute Ignitor Pulse generation deliver the beam parameters that ignition calls for to the fuel target. Transverse emittance benefits the most, by limiting stacking in transverse phase space. The factor, e.g. 2.5x (including dilution), by which transverse emittance grows in each plane, as a result of Merging multiple beams emitted by the Linac, is the only one of the series of beam conditioning processes that employs the transverse (4D) phase space. Smaller transverse emittance enables achievement of smaller beam spots on the target, which increases heating intensity as the inverse of the diameter squared. For illustration, a spot diameter five times smaller will increase the intensity twenty five times. Prior art indicates that this much improvement is not required, but the potential is important for confident development of fusion power. Preservation of the microbunch structure and integrity in phase space offers, in principle, to deliver the smallest emittances to the target. The Snug and Slick effects capitalize on microbunch maintenance to conserve longitudinal phase space by systematically moving inter-bunch spaces to the adjacent inter-Slug spaces, which subsequently are largely removed (according to pulse timing specifications) by the Helical Delay Line. This process compacts the beam without damaging the longitudinal emittance, resulting in lower chromatic aberration at the target.

Generation of Ignitor Pulses by a single pass through the system relaxes the vacuum requirements. This avoids cost and adds safety margin to the design. The new beam processes do not call for multi-turn injection into storage rings. This avoids areas of prior technical concern, significant design effort, and major hardware demonstrations of issues peculiar to storage rings. Removing these concerns shortens the schedule for HIF by removing the need for a time-consuming validation project, necessitating hardware with size, capabilities, and costs similar to those of the storage rings and linac that would be used in a power producing system.

For an illustrative comparison to the prior art, the new Driver concept combines 5-10x higher total Ignitor Pulse energy (or more); as high or higher total Ignitor Pulse power; smaller spot sizes on targets; appropriate pulse power shaping at the target; Fast Ignition that is optimizable by choice of Ion Species for the Slugs in the Fast Ignition Pulse. The combination of improvements to the prior state of the art results in the system meeting all known or theorized requirements for the economical production of fusion power.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative sense rather than a restrictive sense.

**Claims**

1.  A particle accelerator system comprising:

    a source assembly for emitting a stream of isotopic slugs, each slug comprising a train of microbunches;
    at least one RF (radiofrequency) accelerator section for receiving said slug stream and focusing, accelerating and funneling said slug stream until a plurality of high-current, parallel slug trains emerges;
    a telescoper for receiving said plurality of high-current parallel slug trains and emitting different isotopic species into a single common-rigidity beamline so that said species arrive at a fusion target in a specified sequence;
    at least one snugger for receiving said common-rigidity beamline and snugging slugs within said common-rigidity beamline until they drift to points at prescribed distances from at least one target in at least one reaction chamber.

2.  The system of Claim 1, wherein said source assembly comprises:

a patterned array of heavy ion sources, each source emitting pulses of a separate isotopic species in a sequence determined by a control element; and
a HVDC (high-voltage direct current) preaccelerator for accelerating said heavy ion beam pulses to value that corresponds to a synchronous speed required by said at least one RF accelerator section, wherein electrodes in said HVDC preaccelerator are disposed in a manner that mirrors patterning of said array of heavy ion sources.

3. The system of Claim 1, wherein said at least one RF accelerator section comprises:

a first RF section comprising a multi-channel radiofrequency quadrupole (RFQ), which provides strong focusing fields and smoothly increasing accelerating field to approach isentropic conversion of a DC incoming slug beam into microbunches in a continuous stream at an RF frequency;
an aligner for funneling slugs of a variety of isotopes from said first RF section structure to a single collinear beam comprising a variety of isotopic slugs specified by a programmed time sequence and for increasing an average current of a slug; and
a plurality of additional RF sections wherein an incoming beam is funneled so that average current of each slug is approximately doubled again as it passes between a first accelerator section and a following accelerator section, wherein an rf frequency of the following structure is at double the frequency of the first structure, conducted in a complementary arrangement of beamline magnets, such as to progressively align the two funneled beams into one beam on a common axis.

4. The system of Claim 1, wherein said telescoper comprises an accelerator section having at least one pulse-switched magnet;
wherein said system further comprises a merger for merging a multiplicity of beams in a transverse phase space as they emerge from said telescoper into a single beam;
said system further comprising:

a looper for sorting successive sections of beam, provided with time gaps between said sections by gating ion source emission or applying magnetic or electric fields at a later stage of low-energy acceleration, into parallel beamlines, in synchronism at the level of the individual microbunches in the beam sections in parallel beamlines, as needed for microbunch structure to be maintained in common rf structures with multiple bores for the parallel beams.

5. The system of Claim 1, wherein said at least one snugger differentially accelerates each microbunch within a slug within a beamline so that microbunches within slugs are moved closer together while being maintained under the control of RF phase focusing;
wherein said snugger comprises a succession of blocks of rf accelerator sections, said blocks operating with a succession of RF frequencies, said succession of RF frequencies programmed to coordinate acceleration of the multiplicity of isotopic slugs, each of which has a specific characteristic speed; and
wherein said snugger further comprises a snug-stopper for temporarily stopping snugging of slugs until they drift to points at prescribed distances from at least one target in at least one reaction chamber.

6. A driver for a heavy ion fusion system comprising:

a particle accelerator system as in Claim 1;
a delay line for eliminating at least a portion of a distance between centers of successive slugs;
a controller for controlling arrival of said slugs at fusion fuel targets in specified reaction chambers according to a specified schedule;
at least one slicker for imparting specified velocity differentials into microbunches of said slugs at specified distances upstream from each of said reaction chambers;
a wobbler for swirling a beam spot rapidly around a fusion fuel target, for purposes of smooth energy deposition density in said fusion fuel target; and
at least one final focusing lens for focusing said beam on a fusion fuel target.

7. The driver of Claim 6, wherein said delay line comprises a helical delay line (HDL), wherein a common HDL is used for all isotopes;
wherein at least a portion of said distance between centers occurs as a result of a snugging process wherein total average current of each of said slugs is increased and length of each of said slugs is decreased;
wherein said HDL comprises a plurality of coils, wherein a length of each coil is approximately equal to the distance between centers of successive slugs;

wherein a first slug in a slug train traverses the full length of the HDL before its exit point;

wherein successive slugs of progressively faster ions exit the HDL sequentially, after traversing progressively fewer turns of the HDL;

and

wherein exits for various slugs are approximately at a same azimuthal point on the HDL.

8. The driver of Claim 6, wherein said at least one slicker comprises a slicker for each reaction chamber;

wherein said at least one slicker comprises at least one slicker for a compression pulse and at least one slicker for each fast ignition pulse;

wherein slicking in separate slickers for the fast ignition and compression pulse occurs after bifurcation of a beam pulse into separate beamlines with separate slickers for the fast ignition and the compression pulses;

wherein all isotopic species use one set of beamlines from the delay line to the individual slicker at each of the reaction chambers;

wherein, said slicker comprises one or more sections of linear accelerator operating at an rf frequency such that different microbunches are differentially accelerated to cause their centers to approach each other; and

wherein, during slicking, individual microbunches stretch along an axis of a phase space ellipse while the area of said phase space ellipse remains constant during transport in beamlines toward a fusion target, with a result that individual microbunches become longer, skinnier ellipses as they simultaneously approach said fusion target and the combined action of individual microbunches stretching and moving closer together results in a net current amplification, so that microbunches slide on top of one another at said target or another specified point on the beamline, to achieve a desired shape of the total beam current on the target, by controlling the slick accelerator parameters and timing.

9. The driver of Claim 6, wherein said wobbler comprises an RF wobbler;

wherein said wobbler is located upstream from said at least one final focusing lens;

wherein a block of slugs for a compression pulse is subjected to said wobbler and wherein a block of slugs for a fast ignition pulse is not subjected to said wobbler because said fast ignition pulse is directed at a center of a target; and

wherein using slower ions for a fast ignition pulse, compared to a speed of compression pulse ions provides a space in time between the two pulses that can be used to turn the Wobbler on or off.

100

101

102

Industry
Park

10-20 Chambers

104

4 beams

4 beams

10 Isotopes
20GeV ±1GeV
10 μsec/Slug
±0.5% Dp/p end-end
2 Slug Trains
20 total Slugs
200 μsec beam
TBD μsec space
4 parallel beamlines

Show path for Fast Ignition Beam
lower energy for higher mass particles.

Rotator Snuggerator Telescoperator        Main Linac

108

DTL 100MHz

Ⓐ

Ⓑ

Equal βγA/q          Equal β

Intra-Isotope     Intra-Isotope
±0.5GeV           ±1GeV
400 MHz           400 MHz
4 beams           Step phase angle
                  Tank-tank frequency steps
                  4 beams

| 400 MHz | 200 MHz | 100 MHz |
|---|---|---|
| 1 structure | 1 structure | 2 struct. |
| 4 bores | 4 bores | 8 bores |
| 4715 m | 3400 m | 903 m |
| 150MeV/u | 50MeV/u | 10 MeV/u |

107

**FIG. 1**

FIG. 1
(Cont'd)

FIG. 2

Shaped Neutron Absorber

*300*

60 cm diameter
Natural Lithium

Ion Beam Channels
Visible in Top View
301

302

**FIG. 3**

Conventional energy conversion (steam turbines, etc.)

10 meters

Lithium steams
401

400

Hot Lithium Pool
& Heal Exchanger
402

Heat Transport To
Energy Conversion

To Lithium Preaccelerators
& Processing

FIG. 4

*500*

From fuel processing and assembly

**FIG. 5**

**Advanced energy conversion (high efficiency)**

B-Compression, Reverse θ-Pinch
Ignition-plus approx. 10 microseconds

Magnet yoke

MHD duct

○○○○○○○○○ Magnet coil ○○○○○○○○○○
Compressed B-field

Lithium plasma

Igniter Port

FIG. 6

EP 2 722 851 A2

**Energy Capture**

Reverse
Theta Pinch
Midplane

700

Lithium
Plasma

$\frac{dB}{dt}$

Transmission Line

Capacitor

**FIG. 7**

*FIG. 8*

900

Fuel Assembly
Injector

901

Containment Tube

88

Ion Beam Ports

Molten Salt
Heat Exchanger
902

~ 60 meters

**FIG. 9**

*FIG. 10*

EP 2 722 851 A2

1101
1
ion source

1102
2
Preaccelerator
HVDC

1103
3
IMarquee linac
e.g. RFQ structure

1104
4
aligner

1105
5
main linac
multiple types of
RF structures with
frequency 2x in each

1106
6
telescoper

1107
7
merger

1108
8
looper

1109
9
snugger

1110
10
snug stopper

before&after
beam bifurcation into
FI and Comp Pulses

1111
11
helical delay line

1112
12
drift

any gap between boxes not otherwise identified must be basic beamline.

1113
13
chamber selection
switch

1114
14
compressor pulse
slicker

1115
15
ignitor pulse
slicker

1116
16
wobbler

1117
17
final focus

before&after
beam bifurcation into
FI and Comp Pulses

Note:
reflectors are used in beam-
lines where there is no
particular RF fields to provide
the phase focusing that keeps
the bunches from spreading
out and overlapping
each other before it is time for
that (which is at the pellet)

*FIG. 11*

*1200*

## Pulse Structure- Multi-Source - HVDC

1201

*1.5MeV, 100mA, Xe+ (ANL, 1979)*

|10μsec|

1202

Illustration of Source
Firing Pattern

10 ignition pulses generated per second

0.25 millisec          0.25 millisec          0.25 millisec
        99.75 millisec          99.75 millisec

← HVDC →

0.1 amp

time →

*FIG. 12*

10 ignition pulses generated per second

┌1300
0.25 millisec   99.75 millisec   ┌1300
0.25 millisec   99.75 millisec   ┌1300
0.25 millisec

HVDC

time ⟶

**FIG. 13**

*Showing 3 Slug species O*
*1 of 4 Parallel Beams shown*

0 0 0 0 0 0 0 0 0 0

1400

0 0 0 0 0 0 0 0 0 0

*RF amplitude approx. 1% change per Slug*

**FIG. 14**

*1500*

Funneling Linac Tree
1501

2x frequency jumps

10 microsec
1503

Slug
switching
space decreases 1/2 rf period at jumps

1502

delay line

from: "the accelerator process..."

**FIG. 15**

**Interleaving at Frequency Doublings ("funneling")**

~1300

From Source & HVDC →

| Accelerator Stage | RF Frequency | Number Beamlines | Current/ Beamline | Total Current |
|---|---|---|---|---|
| 1 | 12.5MHz | 4x16 | 0.1A | 6.4A |
| 2 | 25MHz | 4x8 | 0.2A | |
| 3 | 50MHz | 4x4 | 0.4A | |
| 4 | 100MHz | 4x2 | 0.8A | |
| 5 | 200MHz | 4x1 | 1.6A | |
| 6 | 400MHz | 4x1 | 1.6A | |

-10μsec

To De-Spacing by:
Intra-isotope μBunch snugging inside Cars
    Spaces μbun-μbun → Spaces Car-Car
    Isotope Car-Isotope Car Spaces increase
Car tail-next Car head space removal
Center-Center Car Spacing from $10^+$μsec → -0.2μsec

-10μsec

Car Isotope 4
Car Isotope 3
Car Isotope 2
Car Isotope 1

Final Compression ≤5:1

Telescoping
Car Centers overlap
at fusion target

Interleaving μbunches at frequency doubling
G51 setup to demonstrate interleaving output
of two-beam RFQ

| ion sources | injections | two-beam RFQ | rf deflector |
|---|---|---|---|

Experimental set-up of the two beam
funneling experiment

**FIG. 16**

EP 2 722 851 A2

**Relative Length and Spacings of Slugs, using 3 species for illustration**

*Main Mouth: All Slug Species have the same speed.*

*Teleceleator Mouth: Separated Function*

*Snuggerator Mouth*
*optionally: Combined-Function Telecelerator Mouth*

*Before Staircase*

*After Staircase*

*Approaching Target*

**FIG. 17**

*1800*

*Offset bunch spacings & rf periods*

**FIG. 18**

µBunches Slide on RF Phase to Snug in a Slug

1900

diagram shows only linear portion of sinewave.
basic concept illustrated with same differential energy between bunches.
stability of the slide as bunches snug suggests more of the wave can be used.
follow-on analysis will include this consideration and other details.

1901

RF voltage waveform at Point A
RF cycle for last bunch in a slug.
Last bunch is to be accelerated the most.
The number of RF cycles equals the
number of µbunches in a slug.

RF voltage waveform at Point A
RF cycle for first bunch.
First bunch is to be decelerated the most.

Snug Driving

time

$\emptyset_1 = -30°$

time

$\emptyset_N = +30°$

to drive snugging, RF frequency higher than bunch frequency
$f_{RF} = f_{bun}(1+2 \cdot \emptyset_n/N_{bun})$
initial RF frequency - 400MHz
final RF frequency ≤ 4000MHz

timing is keyed to the passage of the slug's middle bunch
   perfect timing is for this bunch to see the zero crossing of the RF field, which gives no acceleration or deceleration but maintains phase focusing.
errors in timing will show up as departure of the arrival of the centroid of the slug at the target from the nominal perfect moment.
   there are 4000 µbunches in each slug, thus, a timing error that misses matching the central µbunch with the zero crossing by as much as ±10RF cycles will result
      in the centroid of the bunch arriving by ±1/400th of the total duration of the slug, if the final slug length is 10nsec this error will be 1/40th nsec.
ideal phase control accuracy is the total phase shift over all the µbunches in a slug divided by the number of µbunches and associated RF cycles operating on the slug.
   using only the linear portion of the RF waveform for 4000 µbunches the ideal phase accuracy is ±30degrees/2000cycles, or 1/67th degree, effects for timing
      errors on other 3999 µbunches are similar. effect of non-linearity of sinewave is for later analysis, but stability of slide and phase focusing suggest all bunches will
      move into linear portion of the RF voltage waveform and be well controlled.

1902

RF voltage waveform at Point B
RF cycle for last bunch in a slug.
Last bunch is to be decelerated the most.
The number of RF cycles equals the
number of µbunches in a slug.

RF voltage waveform at Point B
Near start of snug undriving
RF cycle for first bunch.
First bunch is to be accelerated the most

Snug unDriving

time

$\emptyset_1 + -30°$

time

$\emptyset_N + -30°$

to undrive snugging, RF frequency lower than bunch frequency
$f_{RF} = f_{bun}(1-2 \cdot \emptyset_n/N_{bun})$
initial undrive RF frequency ≥ 2000MHz
final RF frequency - 4000MHz

at end of snug undriving, space between µbunches in a slug is ~1/10 the space at the start.
residual speed difference between first-last bunches in a slug ~0.5% remains to continue snugging during remaining distance to target. also
during final drift distance, µbunches shear longitudinally and electrostatic repulsion between µbunches tends to remove residual energy spread,
causing individual µbunches to "fatten" in longitudinal phase space while their centroids move up or down toward the zero ∂p axis.

FIG. 19

FIG. 20

**FIG. 21**

## Spiral Staircase Delay Line for Slugs of Different Species

*Telescopic Species Sources*

○◎◉ *Sources for Multiple Ion Species. 9 shown. number for baseline design is 10.*
◎◎◉ *Sequentially Fire Multiple-Microbunch "Slugs" of Different Species.*
⊘● *"Bird Hotel" Integrated Multi-Source for Multi-Species*

*Helix diameter~ 500 m:A design variable based on incoming Slug spacing.*

$$B \cdot rho = \frac{3.1 \cdot eta \cdot A}{q} = 248 \ T\text{-}m$$

*Red Species Slug example*
*4000 microbunches/Slug*
*10 microseconds/Slug*

Top view
2 beams on top
or bottom

End view
4 parallel beamtubes

-60 cm

2201

To series of switches

2205

that put Slugs back

in series in one set

of 4 beamlines that

lead to one or the

other side of the

fusion fuel target.

Switch Magnet

2204

**Input spacing of Slugs:** →
*Comparable to 10 microsecs like output of accelerator.*

**Output spacing:**
• *Could be zero if desired. (Not.)*
• *Spacing adjusted by input.*
• *Timing of source emission & varing RF in accelerator.*

**FIG. 22**

EP 2 722 851 A2

**FIG. 23**

EP 2 722 851 A2

FIG. 24

*at exit from Slicker*
time=T
distance to target=Z

*downstream from Slicker*
timeT1>T
distance to target Z1<Z

*Slicked to potential minimum duration*
timeT1>T
distance to target = 0

last microbunch of Slug

$\Delta p\ (\Delta E)$

$\Delta t$

Energy spread
of single bunch

instantaneous
energy spread
of single bunch

total energy spread
to be focused

first microbunch of Slug

**FIG. 25**

2600

*at input to Slicker:*
*momentum spread: ± 1.2e-3 @ 4GHz: pulse half-length 30 degrees (1/12) of 4GHz (0.25nsec): 0.021nsec*

← 0.25μsec →

1000 μbuns

O O O O O O O O O O O O O O O O O O O O O O O O O O

←→
*0.25nsec*

*0.25μsec*
*1000 μbuns*

*±0.0025 Slicker (e.g. 20GeV x (±2.5e-3)=50MeV)*

*At optimal Slick:*

20 nsec

←————— 10nsec —————→

1.2e-3

| | |
|---|---|
| *Sum of Instantaneous momentum spreads of 1000 μbunches:* | *0.009* |
| *Difference between momentum of fastest and slowest ion in μbunch:* | *0.0024* |
| *Total momentum spread to be focused:* | *0.0114* |

*from:"Longi PhSp slanted ..."*

**FIG. 26**

~2700

Multiple isotope "slugs"

compression Xe ▭ beta=0.51±5%

ignition Hg ▭ beta=0.36±5%

wobbler
risetime

Time = T1

target

lens

wobbler

0

Wall
5m

Lens Exit
10m

Lens Entrance
20m

Time = T2

t@Hg leave wobbler =
t@t_wobbler start-rise =
t@Xe enter wobbler =
t@0 =
t@+Tc end =

Time = T3
20ns
shaping various

FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61061593 A